(19) **Europäisches Patentamt / European Patent Office / Office européen des brevets**

(11) **EP 2 808 859 B1**

(12) # EUROPEAN PATENT SPECIFICATION

(45) Date of publication and mention
of the grant of the patent:
**29.06.2016 Bulletin 2016/26**

(21) Application number: **12866670.8**

(22) Date of filing: **18.09.2012**

(51) Int Cl.:
$G09C\ 1/00$ (2006.01) $\qquad$ $H04L\ 9/00$ (2006.01)
$H04L\ 9/06$ (2006.01)

(86) International application number:
**PCT/JP2012/005930**

(87) International publication number:
**WO 2013/111210 (01.08.2013 Gazette 2013/31)**

(54) **ENCRYPTION EVALUATION DEVICE, ENCRYPTION EVALUATION METHOD, AND ENCRYPTION EVALUATION PROGRAM**

VERSCHLÜSSELUNGSAUSWERTUNGSVORRICHTUNG, VERSCHLÜSSELUNGSAUSWERTUNGSVERFAHREN UND VERSCHLÜSSELUNGSAUSWERTUNGSPROGRAMM

DISPOSITIF D'ÉVALUATION DE CHIFFREMENT, PROCÉDÉ D'ÉVALUATION DE CHIFFREMENT ET PROGRAMME D'ÉVALUATION DE CHIFFREMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.01.2012 JP 2012010616**

(43) Date of publication of application:
**03.12.2014 Bulletin 2014/49**

(73) Proprietor: **NEC Solution Innovators, Ltd.
Tokyo 136-8627 (JP)**

(72) Inventor: **SAITO, Teruo
Ishikawa, 920-2141 (JP)**

(74) Representative: **Robson, Aidan John
Reddie & Grose LLP
16 Theobalds Road
London WC1X 8PL (GB)**

(56) References cited:
JP-A- 2001 022 270    JP-A- 2004 072 493
JP-A- 2004 153 733    JP-A- 2008 109 287
JP-A- 2009 282 089    US-A1- 2004 101 135
US-A1- 2005 117 742

- BOGDANOV ANDREY ET AL: "Biclique Cryptanalysis of the Full AES", 4 December 2011 (2011-12-04), ADVANCES IN COMMUNICATION NETWORKING : 20TH EUNICE/IFIP EG 6.2, 6.6 INTERNATIONAL WORKSHOP, RENNES, FRANCE, SEPTEMBER 1-5, 2014, REVISED SELECTED PAPERS; [LECTURE NOTES IN COMPUTER SCIENCE , ISSN 1611-3349], SPRINGER VERLAG, DE, PAGE(S) 344 - 371, XP047309663, ISSN: 0302-9743 ISBN: 978-3-540-28061-3 * the whole document *

Printed by Jouve, 75001 PARIS (FR)

**Description**

TECHNICAL FIELD

The present invention relates to an encryption evaluation device evaluating the security of a block cipher.

BACKGROUND ART

Meet-in-the-middle attack on a block cipher is known. A block cipher is a method encrypting data of a predetermined size for each block by repeatedly executing, a predetermined number of rounds, a round process using a round function converting data based on a key.
In meet-in-the-middle attack, the whole structure of a block cipher is divided into two process parts including a first process part using a first subkey and a second process part using a second subkey. The respective sizes of the first subkey and the second subkey are smaller than the size of the key used by the abovementioned whole structure.
At first, the first subkey and the second subkey are assumed. Then, the first process part encrypts a plaintext based on the assumed first subkey, and first intermediate data is thereby generated. Moreover, the second process part decrypts a known ciphertext obtained by encrypting the plaintext, and second intermediate data is thereby generated.
When the first intermediate data and the second intermediate data are coincident with each other, a candidate for an authentic key is specified based on the assumed first subkey and second subkey. Therefore, meet-in-the-middle attack can reduce a calculation amount required to specify an authentic key, as compared with a case where the whole structure of a block cipher encrypts a plaintext based on an assumed key to generate a ciphertext and specifies an authentic key based on whether the generated ciphertext and a known ciphertext are coincident with each other or not.
An encryption evaluation device evaluating the security of a block cipher is known. As one of this type of encryption evaluation devices, an encryption evaluation device described in A. Bogdanov, D. Khovratovich, C. Rechberger, "Biclique Cryptanalysis of the Full AES," ASIACRYPT 2011, LNCS 7073, Springer, 2011, pp. 344-371 calculates a security index value indicating a calculation amount that is required to specify an authentic key by performing meet-in-the-middle attack on the AES (Advanced Encryption Standard) cipher.
A case of applying the abovementioned encryption evaluation device to a block cipher having a generalized Feistel structure (GFS) will be considered.
In this case, when the structure (e.g., a round number, a division number, or the like) of the block cipher is changed, a method for calculating a security index value also changes with the change of the structure. Moreover, a processing load for calculating a security index value is relatively large. Herein, a division number is the number of sub-round processes configuring a round process. Each of the sub-round processes is a process on one of sub-blocks obtained by dividing a block into the division number.
Thus, there is a problem that the abovementioned encryption evaluation device cannot speedily calculate a security index value indicating a calculation amount required to specify an authentic key by performing meet-in-the-middle attack.

We have appreciated that it would be desirable to provide an encryption evaluation device capable of solving the abovementioned problem, "there is a case where it is impossible to speedily calculate a security index value."

SUMMARY OF THE INVENTION

In order to achieve the object, an encryption evaluation device as an aspect of the present invention is a device evaluating security of a block cipher encrypting data of a predetermined size for each block by repeatedly executing a round process a predetermined number of rounds, the round process using a round function converting data based on a key.
Moreover, this encryption evaluation device includes:

  a structure specification information accepting means for accepting structure specification information for specifying a structure of the block cipher; and
  a security index value calculating means for specifying a non-use number as a number of round functions that are not used in meet-in-the-middle attack, based on the accepted structure specification information, and calculating a security index value indicating a calculation amount required to specify the key by performing the meet-in-the-middle attack, based on the specified non-use number.

Further, an encryption evaluation method as another aspect of the present invention is a method for evaluating security of a block cipher encrypting data of a predetermined size for each block by repeatedly executing a round process a predetermined number of rounds, the round process using a round function converting data based on a key.

Moreover, this encryption evaluation method is a method including:

accepting structure specification information for specifying a structure of the block cipher; and
specifying a non-use number as a number of round functions that are not used in meet-in-the-middle attack, based on the accepted structure specification information, and calculating a security index value indicating a calculation amount required to specify the key by performing the meet-in-the-middle attack, based on the specified non-use number.

Further, an encryption evaluation program as another aspect of the present invention is a program comprising instructions for causing an encryption evaluation device to perform operations, the encryption evaluation device evaluating security of a block cipher encrypting data of a predetermined size for each block by repeatedly executing a round process a predetermined number of rounds, the round process using a round function converting data based on a key, and the operations including:

accepting structure specification information for specifying a structure of the block cipher; and
specifying a non-use number as a number of round functions that are not used in meet-in-the-middle attack, based on the accepted structure specification information, and calculating a security index value indicating a calculation amount required to specify the key by performing the meet-in-the-middle attack, based on the specified non-use number.

With the configurations as described above, the present invention enables speedy calculation of a security index value.

BRIEF DESCRIPTION OF DRAWINGS

Fig. 1 is a block diagram showing the function of an encryption evaluation device according to a first exemplary embodiment of the present invention;
Fig. 2 is an explanation diagram conceptually showing FS;
Fig. 3 is an explanation diagram conceptually showing a round function that is not used in meet-in-the-middle attack on FS;
Fig. 4 is an explanation diagram conceptually showing GFS Type-1;
Fig. 5 is an explanation diagram conceptually showing a round function that is not used in meet-in-the-middle attack on GFS Type-1;
Fig. 6 is an explanation diagram conceptually showing GFS Type-2;
Fig. 7 is an explanation diagram conceptually showing a round function that is not used in meet-in-the-middle attack on GFS Type 2;
Fig. 8 is an explanation diagram conceptually showing GFS Type-3;
Fig. 9 is an explanation diagram conceptually showing a round function that is not used in meet-in-the-middle attack on GFS Type-3;
Fig. 10 is an explanation diagram conceptually showing Nyberg's GFS;
Fig. 11 is an explanation diagram conceptually showing a round function that is not used in meet-in-the-middle attack on Nyberg's GFS;
Fig. 12 is an explanation diagram conceptually showing Target-Heavy GFS;
Fig. 13 is an explanation diagram conceptually showing a round function that is not used in meet-in-the-middle attack on Target-Heavy GFS;
Fig. 14 is an explanation diagram conceptually showing Source-Heavy GFS;
Fig. 15 is an explanation diagram conceptually showing a round function that is not used in meet-in-the-middle attack on Source-Heavy GFS;
Fig. 16 is an explanation diagram conceptually showing Unbalanced GFS;
Fig. 17 is an explanation diagram conceptually showing a round function that is not used in meet-in-the-middle attack on Unbalanced GFS; and
Fig. 18 is a block diagram showing the function of an encryption evaluation device according to a second exemplary embodiment of the present invention.

DETAILED DESCRIPTION OF EXAMPLE EMBODIMENTS

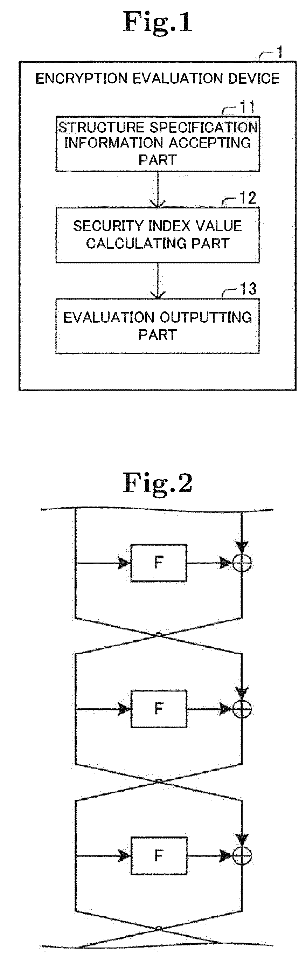

Below, exemplary embodiments of an encryption evaluation device, an encryption evaluation method and an encryption evaluation program according to the present invention will be described referring to Figs. 1 to 18.

<First Exemplary Embodiment>

(Configuration)

As shown in Fig. 1, an encryption evaluation device 1 according to a first exemplary embodiment is an information processing device. Meanwhile, the encryption evaluation device 1 may be a mobile phone terminal, a PHS (Personal Handyphone System), a PDA (Personal Data Assistance, Personal Digital Assistant), a smartphone, a car navigation terminal, a game terminal, or the like.

The encryption evaluation device 1 includes a central processing unit (CPU), a storage device (a memory and a hard disk drive (HDD)), an input device (in this exemplary embodiment, a keyboard and a mouse), and an output device (in this exemplary embodiment, a display), which are not shown in the drawings.

The encryption evaluation device 1 is configured to realize a function to be described later by execution of a program stored in the storage device by the CPU. In this exemplary embodiment, the encryption evaluation device 1 evaluates the security of a block cipher. A block cipher is a method encrypting data of a predetermined size for each block by repeatedly executing, a predetermined number of rounds, a round process using a round function converting data based on a key.

(Function)

Fig. 1 is a block diagram showing the function of the encryption evaluation device 1 configured as described above.

The function of the encryption evaluation device 1 includes a structure specification information accepting part (a structure specification information accepting means) 11, a security index value calculating part (a security index value calculating means) 12, and an evaluation outputting part 13.

The structure specification information accepting part 11 accepts structure specification information for specifying the structure of a block cipher. In this exemplary embodiment, the structure specification information accepting part 11 accepts structure specification information inputted by a user via the input device. Meanwhile, the structure specification information accepting part 11 may be configured to accept structure specification information by receiving the structure specification information from an external device.

Further, in this exemplary embodiment, in the structure of a block cipher, a round process is configured by sub-round processes on the respective sub-blocks obtained by dividing a block into a predetermined division number.

To be specific, the type of the structure of a block cipher is a Feistel Structure (FS) or a Generalized Feistel Structure (GFS). GFS includes a modified GFS.

Further, structure specification information includes information representing the type of a structure, and information representing at least one of a round number and a division number.

The security index value calculating part 12 specifies a non-use number, which is the number of round functions that are not used in meet-in-the-middle attack, based on structure specification information accepted by the structure specification information accepting part 11. Moreover, the security index value calculating part 12 calculates a security index value indicating a calculation amount that is required to specify an authentic key by performing meet-in-the-middle attack, based on the specified non-use number.

In this exemplary embodiment, the security index value calculating part 12 calculates a security index value based on a ratio of a value obtained by subtracting the specified non-use number from the total number of round functions included in the structure of the block cipher to the total number, and based on a power $2^L$, where the base number is 2 and the exponent is a key size L.

The evaluation outputting part 13 outputs a security index value calculated by the security index value calculating part 12 via the output device. Meanwhile, the evaluation outputting part 13 may be configured to determine whether a security index value calculated by the security index value calculating part 12 is larger than a preset reference value or not, and output information representing the block cipher is secure when determining the security index value is larger than the reference value, whereas output information representing the block cipher is dangerous when determining the security index value is smaller than the reference value.

Below, how the security index value calculating part 12 calculates a security index value will be described in more detail.

«FS»

In a case where the type of a structure represented by structure specification information accepted by the structure specification information accepting part 11 is FS, the security index value calculating part 12 calculates a security index value S based on Formula 1 using a key size L and a round number r:

[Formula 1]

$$S = 2^L \times \frac{r-1}{r} \quad \text{where} \quad r \geq 1$$

Herein, a method for deriving Formula 1 will be described. FS has a structure as shown in Fig. 2. For example, FS is DES (Data Encryption Standard) described in the National Bureau of Standards, "Data Encryption Standard," FIPS-Pub.46. National Bureau of Standards, U.S., Department of Commerce, Washington D.C., January, 1977.

At first, a relation between a block $X^i$ as the target of an $i^{th}$ executed round process and a sub-block $x^i_j$ generated by dividing the block $X^i$ into portions of a division number d on the condition that a round number is r is defined as shown by Formula 2, where j denotes an integer that is equal to or more than 0 and equal to or less than d-1:

[Formula 2]

$$X^i = x^i_0 \big| x^i_1 \big| \cdots \big| x^i_{d-1} \quad \text{where} \quad 0 \leq i \leq r$$

In this example, one block is b-bit data. One sub-block is n(=b/d)-bit data. A round process is configured by the division number d of sub-round processes. That is, the sub-block $x^i_j$ is data as the target of a $j^{th}$ sub-round process configuring the $i^{th}$ executed round process.

Further, $X^0 = P$ and $X^r = C$, where P denotes a plaintext and C denotes a ciphertext. The relation shown by Formula 2 is also used in description of a structure other than FS.

In FS, a division number is 2 as shown in Fig. 2. In other words, one sub-block is b/2-bit data. Moreover, in this example, a round function F is a objective function that converts b/2-bit data with each bit indicating 0 or 1 into b/2-bit data with each bit indicating 0 or 1 (i.e., $\{0;1\}^{b/2} \rightarrow \{0;1\}^{b/2}$). A round function is also referred to as an F function.

A $0^{th}$ sub-round process configuring the $i^{th}$ executed round process is shown by Formula 3, and a $1^{st}$ sub-round process configuring the $i^{th}$ executed round process is shown by Formula 4:

[Formula 3]

$$x^{i+1}_0 = F\left(x^i_0 \oplus k_i\right) \oplus x^i_1$$

[Formula 4]

$$x^{i+1}_1 = x^i_0$$

A symbol "o" with "+" drawn inside is an operator representing exclusive OR. Moreover, $k_i$ denotes a key (a round key) used in the $i^{th}$ executed round process.

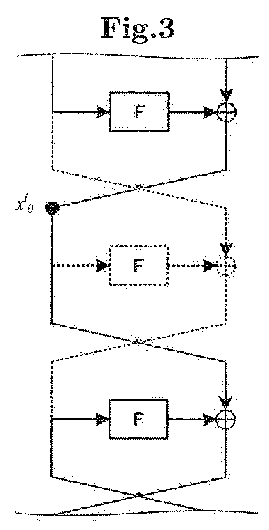

Next, meet-in-the-middle attack on the block cipher having FS will be considered. A case of confirming coincidence of data with respect to a sub-block $x^i_0$ (a black circle in Fig. 3) as the target of the $0^{th}$ sub-round process configuring the $i^{th}$ executed round process in partial-matching described in K. Aoki, Y Sasaki, "Preimage Attacks on One-Block MD4, 63-Step MD5 and More," SAC2008, LNCS 538, Springer, 2009, pp. 103-119 as shown in Fig. 3 will be assumed. That is, a data length (a data size) m of data as the target of confirmation of coincidence in partial matching is b/2 bits.

In this case, a portion shown with a dotted line in Fig. 3 is not used in meet-in-the-middle attack. In other words, a non-use number as the number of round functions that are not used in meet-in-the-middle attack with respect to FS is 1.

Therefore, in order to specify an authentic key by performing meet-in-the-middle attack, there is a need to execute conversion of data with a round function F r-1 times with respect to each L-bit key. That is, a calculation amount required to specify an authentic key by performing meet-in-the-middle attack increases in direct proportion to a ratio (r-1)/r of a value r-1 obtained by subtracting the specified non-use number 1 from the total number r of round functions to the total number r, and also increases in direct proportion to a power $2^L$, where the base number is 2 and the exponent is the key size L.

Therefore, it can be said that the security index value S in Formula 1 well indicates a calculation amount that is required to specify an authentic key by performing meet-in-the-middle attack.

A calculation amount in confirmation of coincidence of data with respect to a sub-block $X^i_1$ as the target of the $1^{st}$ sub-round process configuring the $i^{th}$ executed round process is equal to a calculation amount in confirmation of coincidence of data with respect to a sub-block $X^{i-1}_0$ as the target of a $0^{th}$ sub-round process configuring a $(i-1)^{th}$ executed round process, and therefore, will be described in the same manner.

Thus, the security index value calculating part 12 specifies 1 as a non-use number based on structure specification information, and calculates, as a security index value, the product of a ratio of a value obtained by subtracting the specified non-use number from the total number of round functions included in the structure of the block cipher to the total number and the power $2^L$, where the base number is 2 and the exponent is the key size L.

«GFS Type-1»

In a case where the type of a structure represented by structure specification information accepted by the structure specification information accepting part 11 is GFS Type-1 as a type of GFS, the security index value calculating part 12 calculates a security index value S based on Formula 5 using a key size L, a round number r, and a division number d:

[Formula 5]

$$S = 2^L \times \frac{r - \frac{d(d-1)}{2}}{r} \qquad \text{where} \qquad r \geq (d-1)^2$$

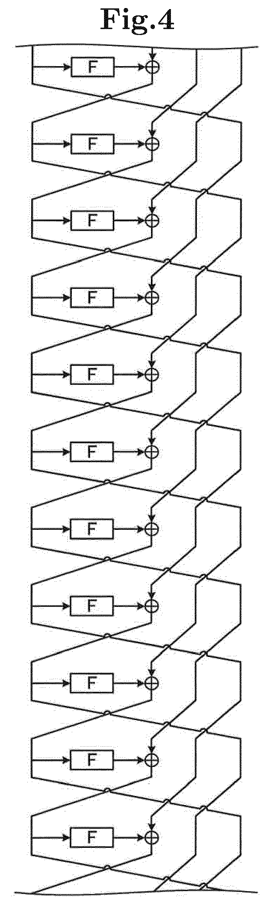

A method for deriving Formula 5 will be described. GFS is described in Y Zheng, T. Matsumoto, H. Imai, "On the Construction of Block Ciphers Provably Secure and Not Relying on Any Unproved Hypotheses," CRYPTO 1989, LNCS 435, Springer, 1990, pp. 461-480. GFS Type-1 has a structure as shown in Fig. 4. For example, GFS Type-1 is CAST-256 described in C. Adams, J. Gilchrist, "The CAST-256 Encryption Algorithm," [online], 1999, Network Working Group RFC 2612, [searched on January 9, 2012], Internet<URL: http://www.ietf.org/rfc/rfc2612.txt>.

In the example shown in Fig. 4, the division number is 4. In other words, one sub-block is b/4-bit data. Moreover, in this example, a round function F is a bijective function that converts b/d-bit data with each bit indicating 0 or 1 into b/d-bit data with each bit indicating 0 or 1 (i.e., $\{0;1\}^{b/d} \rightarrow \{0;1\}^{b/d}$). A round function is also referred to as an F function.

A $0^{th}$ sub-round process configuring an $i^{th}$ executed round process is expressed by Formula 6, and a $j^{th}$ sub-round process configuring the $i^{th}$ executed round process is expressed by Formula 7, where j denotes an integer that is more than 0 and equal to or less than d-1:

[Formula 6]

$$x^{i+1}_0 = F\left(x^i_0 \oplus k_i\right) \oplus x^i_1$$

[Formula 7]

$$x^{i+1}_j = x^i_{(j+1)\%d} \qquad \text{where} \qquad 0 < j \leq d - 1$$

Further, "%" is an operator finding a remainder (a remainder in division). Moreover, $k_i$ denotes a key (a round key) used in the $i^{th}$ executed round process.

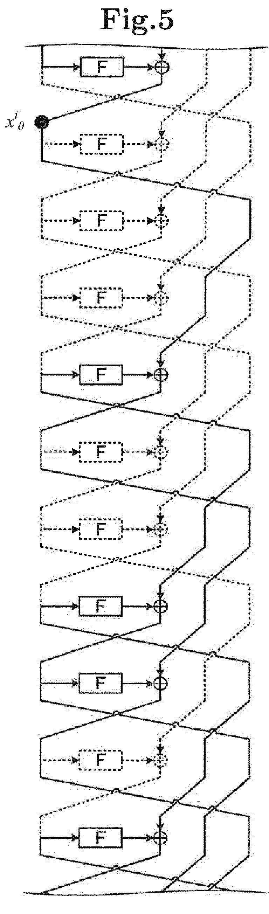

Next, meet-in-the-middle attack on the block cipher having GFS Type-1 will be considered. A case of confirming coincidence of data with respect to a sub-block $x^i_0$ (a black circle in Fig. 5) as the target of the $0^{th}$ sub-round process configuring the i$^{th}$ executed round process in partial-matching described in "Preimage Attacks on One-Block MD4, 63-Step MD5 and More," document as shown in Fig. 5 will be assumed. That is, a data length (a data size) m of data as the target of confirmation of coincidence in partial matching is b/d bits.

In this case, a portion shown with a dotted line in Fig. 5 is not used in meet-in-the-middle attack. That is, a non-use number U as the number of round functions that are not used in meet-in-the-middle attack is expressed by Formula 8:

[Formula 8]

$$U = (d-1) + (d-2) + \cdots + 1 = (d-1) \times \frac{(d-1)+1}{2} = \frac{d(d-1)}{2}$$

Therefore, in order to specify an authentic key by performing meet-in-the-middle attack, there is a need to execute conversion of data with the round function F r-U times with respect to each L-bit key. In other words, a calculation amount required to specify an authentic key by performing meet-in-the-middle attack increases in direct proportion to a ratio (r-U)/r of a value r-U obtained by subtracting the specified non-use number U from the total number r of round functions to the total number r, and also increases in direct proportion to a power 2$^L$, where the base number is 2 and the exponent is the key size L.

Therefore, it can be said that the security index value S in Formula 5 well indicates a calculation amount required to specify an authentic key by performing meet-in-the-middle attack.

A calculation amount in confirmation of coincidence of data with respect to a sub-block $x^i_j$ as the target of the j$^{th}$ sub-round process configuring the i$^{th}$ executed round process is identical to a calculation amount in confirmation of coincidence of data with respect to a sub-block $X^{i-d+j}_0$ as the target of a 0$^{th}$ sub-round process configuring a (i-d+j)$^{th}$ executed round process, and therefore, will be described in the same manner.

Thus, the security index value calculating part 12 specifies a non-use number based on structure specification information and calculates, as a security index value, a product of a ratio of a value obtained by subtracting the specified non-use number from the total number of round functions included in the structure of a block cipher to the total number and a power 2$^L$, where the base number is 2 and the exponent is a key size L.

«GFS Type-2»

In a case where the type of a structure represented by structure specification information accepted by the structure specification information accepting part 11 is GFS Type-2 as a type of GFS, the security index value calculating part 12 calculates a security index value S based on Formula 9 using a key size L, a round number r, and a division number d:

[Formula 9]

$$S = 2^L \times \frac{r-(d-1)}{r} \qquad \text{where} \qquad r \geq 2d-3$$

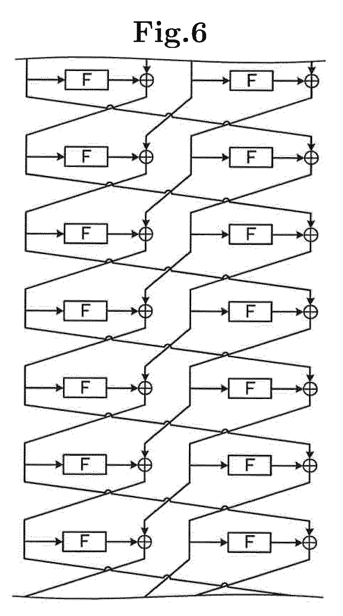

A method for deriving Formula 9 will be described. GFS Type-2 has a structure as shown in Fig. 6. For example, GFS Type-2 is CLEFIA described in T. Shirai, K. Shibutani, T. Akishita, S. Moriai, T. Iwata, "The 128-Bit Blockcipher CLEFIA (Extended Abstract)," FSE 2007, LNCS 4593, Springer, 2007, pp. 181-195, or HIGHT described in D. Hong, J. Sung, S.H. Hong, J.-I. Lim, S.-J. Lee, B.-S. Koo, C.-H. Lee, D. Chang, J. Lee, K. Jeong, H. Kim, J.-S. Kim, S. Chee, "HIGHT: A New Block Cipher Suitable for Low-Resource Device," CHES 2006, LNCS 4249, Springer, 2006, pp. 46.59.

In the example shown in Fig. 6, the division number d is 4. In other words, one sub-block is b/4-bit data. Moreover, also in this example, a round function F is an objective function that converts b/d-bit data with each bit indicating 0 or 1 into b/d-bit data with each bit indicating 0 or 1 (i.e., $\{0;1\}^{b/d} \rightarrow \{0;1\}^{b/d}$). A round function is also referred to as an F function.

Herein, a relation between a key (a round key) $k_i$ used in an i$^{th}$ executed round process and a sub-round key $k_{i,j}$ generated by dividing the round key $k_i$ into d/2 portions on the condition that a round number is r will be defined as shown in Formula 10, where j denotes an integer that is equal to or more than 0 and equal to or less than d/2-1:

[Formula 10]

$$k_i = k_{i,0}|k_{i,1}|\cdots|k_{i,d/2-1} \qquad \text{where} \qquad 0 \leq i \leq r-1$$

A $j^{th}$ sub-round process configuring the $i^{th}$ executed round process is expressed by Formula 11, where j denotes an even number that is equal to or more than 0 and equal to or less than d-1, and moreover, the $j^{th}$ sub-round process configuring the $i^{th}$ executed round process is expressed by Formula 12, where j denotes an odd number that is more than 0 and equal to or less than d-1:

[Formula 11]

$$x_j^{i+1} = F\left(x_j^i \oplus k_{i,j/2}\right) \oplus x_{j+1}^i$$

where $0 \leq j \leq d - 1$, $j$ is even number

[Formula 12]

$$x_j^{i+1} = x_{(j+1)\%d}^i$$

where $0 < j \leq d - 1$, $j$ is odd number

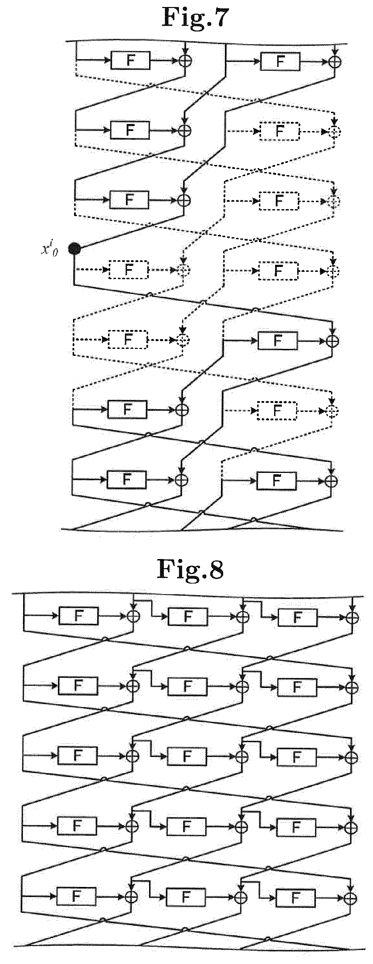

[0061] Next, meet-in-the-middle attack on the block cipher having GFS Type-2 will be considered. A case of confirming coincidence of data with respect to a sub-block $x_0^i$ (a black circle in Fig. 7) as the target of a $0^{th}$ sub-round process configuring the $i^{th}$ executed round process in partial-matching described in the "Preimage Attacks on One-Block MD4, 63-Step MD5 and More," document as shown in Fig. 7 will be assumed. That is, a data length (a data size) m of data as the target of confirmation of coincidence in partial matching is b/d bits.

In this case, a portion shown with a dotted line in Fig. 7 is not used in meet-in-the-middle attack. That is, with respect to GFS Type-2, a non-use number U as the number of round functions that are not used in meet-in-the-middle attack is expressed by Formula 13:

[Formula 13]

$$U = \frac{d}{2} \times \left(\frac{d}{2} - 1\right) \times 2 + \frac{d}{2} = \frac{d(d-1)}{2}$$

Therefore, in order to specify an authentic key by performing meet-in-the-middle attack, there is a need to execute conversion of data with the round function F r·d/2-U times with respect to each L-bit key. In other words, a calculation amount required to specify an authentic key by performing meet-in-the-middle attack increases in direct proportion to a ratio (r-2U/d)/r of a value r·d/2-U obtained by subtracting the specified non-use number U from a total number r·d/2 of round functions to the total number r·d/2, and also increases in direct proportion to a power $2^L$, where the base number is 2 and the exponent is the key size L.

Therefore, it can be said that the security index value S in Formula 9 well indicates a calculation amount required to specify an authentic key by performing meet-in-the-middle attack.

A calculation amount in confirmation of coincidence of data with respect to a sub-block $x_j^i$ (where j denotes an even number that is more than 0 and equal to or less than d-1) as the target of the $j^{th}$ sub-round process configuring the $i^{th}$ executed round process is equal to a calculation amount in confirmation of coincidence of data with respect to a sub-block $x_0^i$ as the target of the $0^{th}$ sub-round process configuring the $i^{th}$ executed round process (equal to in a state where a block as the target of processing in each of the round processes is shifted j·b/d bits to the right), and therefore, will be described in the same manner.

Further, a calculation amount in confirmation of coincidence of data with respect to the sub-block $x_j^i$ (where j denotes an odd number that is more than 0 and equal to or less than d-1) as the target of the $j^{th}$ sub-round process configuring the ith executed round process is equal to a calculation amount in confirmation of coincidence of data with respect to a sub-block $x^{i-1}_{(j+1)\%d}$ as the target of a $\{(j+1)\%d\}^{th}$ sub-round process configuring a (i-1)th executed round process, and therefore, will be described in the same manner.

Thus, the security index value calculating part 12 specifies a non-use number based on structure specification information and calculates, as a security index value, a product of a ratio of a value obtained by subtracting the specified non-use number from the total number of round functions included in the structure of a block cipher to the total number and a power $2^L$, where the base number is 2 and the exponent is a key size L.

«GFS Type-3»

In a case where the type of a structure represented by structure specification information accepted by the structure specification information accepting part 11 is GFS Type-3 as a type of GFS, the security index value calculating part 12 calculates a security index value S based on Formula 14 using a key size L, a round number r, and a division number d: [Formula 14]

$$S = 2^L \times \frac{r - \frac{d}{2}}{r} \quad \text{where} \quad r \geq d - 1$$

A method for deriving Formula 14 will be described. GFS Type-3 has a structure as shown in Fig. 8.

In the example shown in Fig. 8, the division number d is 4. In other words, one sub-block is b/4-bit data. Moreover, also in this example, a round function F is a bijective function that converts b/d-bit data with each bit indicating 0 or 1 into b/d-bit data with each bit indicating 0 or 1 (i.e., $\{0;1\}^{b/d} \rightarrow \{0;1\}^{b/d}$). The round function is also referred to as an F function.

Herein, a relation between a key (a round key) $k_i$ used in an ith executed round process and a sub-round key $k_{i,j}$ generated by dividing the round key $k_i$ into d portions on the condition that a round number is r will be defined as shown by Formula 15, where j denotes an integer that is equal to or more than 0 and equal to or less than d-1:

[Formula 15]

$$k_i = k_{i,0} \big| k_{i,1} \big| \cdots \big| k_{i,d-1} \quad \text{where} \quad 0 \leq i \leq r - 1$$

A jth sub-round process configuring the ith executed round process is expressed by Formula 16, where j denotes an integer that is equal to or more than 0 and less than d-1, and moreover, a (d-1)th sub-round process configuring the ith executed round process is expressed by Formula 17:

[Formula 16]

$$x^{i+1}_j = F\left(x^i_j \oplus k_{i,j}\right) \oplus x^i_{j+1} \quad \text{where} \quad 0 \leq j < d - 1$$

[Formula 17]

$$x^{i+1}_{d-1} = x^i_0$$

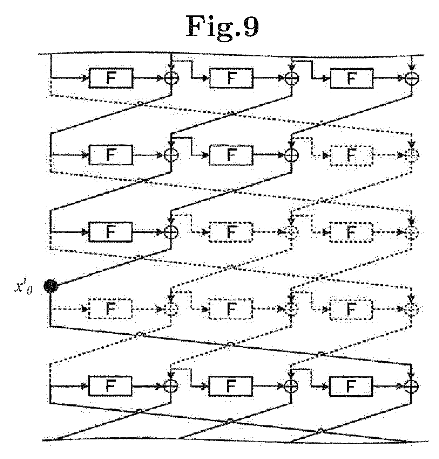

Next, meet-in-the-middle attack on the block cipher having GFS Type-3 will be considered. A case of confirming coincidence of data with respect to a sub-block $x^i_0$ (a black circle in Fig. 9) as the target of a 0th sub-round process configuring the ith executed round process in partial-matching described in the "Preimage Attacks on One-Block MD4, 63-Step MD5 and More," document as shown in Fig. 9 will be assumed. That is, a data length (a data size) m of data subjected to confirmation of coincidence in partial matching is b/d bits.

In this case, a portion shown with a dotted line in Fig. 9 is not used in meet-in-the-middle attack. That is, with respect to GFS Type-3, a non-use number U as the number of round functions that are not used in meet-in-the-middle attack is expressed by Formula 18:

[Formula 18]

$$U = (d-1) + (d-2) + \cdots + 1 = (d-1) \times \frac{(d-1)+1}{2} = \frac{d(d-1)}{2}$$

Therefore, in order to specify an authentic key by performing meet-in-the-middle attack, there is a need to execute conversion of data with the round function F r·(d-1)-U times with respect to each L-bit key. That is, a calculation amount required to specify an authentic key by performing meet-in-the-middle attack increases in direct proportion to a ratio {r-U/(d-1)}/r of a value r(d-1)-U obtained by subtracting the specified non-use number U from a total number r·(d-1) of round functions to the total number r(d-1), and also increases in direct proportion to a power $2^L$, where the base number is 2 and the exponent is the key size L.

Therefore, it can be said that the security index value S in Formula 14 well indicates a calculation amount required to specify an authentic key by performing meet-in-the-middle attack.

A calculation amount in confirmation of coincidence of data with respect to a sub-block $X^i_{d-1}$ as the target of the $(d-1)^{th}$ sub-round process configuring the $i^{th}$ executed round process is equal to a calculation amount in confirmation of coincidence of data with respect to a sub-block $x^{i-1}_0$ as the target of a $0^{th}$ sub-round process configuring a $(i-1)^{th}$ executed round process, and therefore, will be described in the same manner.

Meanwhile, a calculation amount in confirmation of coincidence of data with respect to a sub-block $x^i_j$ (where j denotes an integer that is more than 0 and less than d-1) as the target of the $j^{th}$ sub-round process configuring the $i^{th}$ executed round process is more than a calculation amount in confirmation of coincidence of data with respect to the sub-block $x^i_0$ as the target of the $0^{th}$ sub-round process configuring the $i^{th}$ executed round process, and therefore, a description thereof will be omitted.

Thus, the security index value calculating part 12 specifies a non-use number based on structure specification information and calculates, as a security index value, a product of a ratio of a value obtained by subtracting the specified non-use number from the total number of round functions included in the structure of a block cipher to the total number and a power $2^L$, where the base number is 2 and the exponent is a key size L

<<Nyberg's GFS>>

In a case where the type of a structure represented by structure specification information accepted by the structure specification information accepting part 11 is Nyberg's GFS as a type of GFS, the security index value calculating part 12 calculates a security index value S based on Formula 19 using a key size L, a round number r, and a division number d:

[Formula 19]

$$S = 2^L \times \frac{r-d}{r} \qquad \text{where} \qquad r \geq \frac{3}{2}d$$

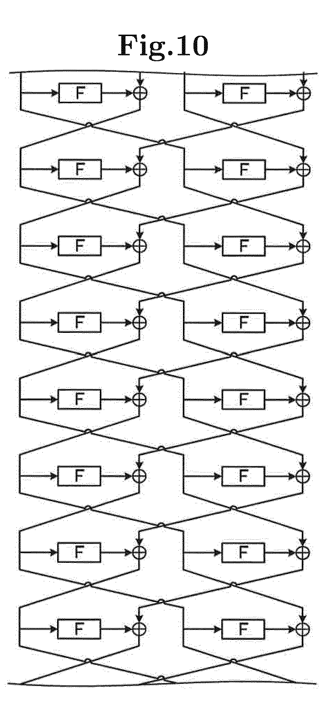

A method for deriving Formula 19 will be described. Nyberg's GFS has a structure as shown in Fig. 10. Nyberg's GFS is described in K. Nyberg, "Generalized Feistel Network," ASIACRYP 1996, LNCS 1163, Springer, 1996, pp.91-104.

In the example shown in Fig. 10, the division number d is 4. In other words, one sub-block is b/4-bit data. Moreover, also in this example, a round function F is a bijective function that converts b/d-bit data with each bit indicating 0 or 1 into b/d-bit data with each bit indicating 0 or 1 (i.e., $\{0;1\}^{b/d} \rightarrow \{0;1\}^{b/d}$). The round function is also referred to as an F function.

Herein, a relation between a key (a round key) $k_i$ used in an $i^{th}$ executed round process and a sub-round key $k_{i,j}$ generated by dividing the round key $k_i$ into d/2 portions on the condition that a round number is r will be defined as shown by Formula 20, where j denotes an integer that is equal to or more than 0 and equal to or less than d/2-1:

[Formula 20]

$$k_i = k_{i,0} | k_{i,1} | \cdots | k_{i,d/2-1} \qquad \text{where} \qquad 0 \leq i \leq r-1$$

A $0^{th}$ sub-round process configuring the $i^{th}$ executed round process is expressed by Formula 21. Moreover, a $j^{th}$ sub-round process configuring the $i^{th}$ executed round process is expressed by Formula 22, where j denotes an even number that is more than 0 and less than d-1. Moreover, the $j^{th}$ sub-round process configuring the $i^{th}$ executed round process is expressed by Formula 23, where j denotes an odd number that is more than 0 and less than d-1. Moreover, a $(d-1)^{th}$ sub-round process configuring the $i^{th}$ executed round process is expressed by Formula 24.

[Formula 21]

$$x_0^{i+1} = F\left(x_0^i \oplus k_{i,0}\right) \oplus x_1^i$$

[Formula 22]

$$x_j^{i+1} = x_{j-2}^i \quad \text{where} \quad 0 < j < d-1, j \text{ is even number}$$

[Formula 23]

$$x_j^{i+1} = F\left(x_{j+1}^i \oplus k_{i,\frac{j-1}{2}}\right) \oplus x_{j+2}^i \quad \text{where} \quad 0 < j < d-1, j \text{ is odd number}$$

[Formula 24]

$$x_{d-1}^{i+1} = x_{d-2}^i$$

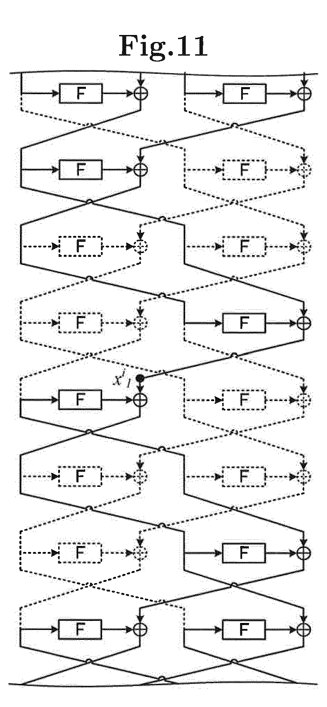

Next, meet-in-the-middle attack on the block cipher having Nyberg's GFS will be considered. A case of confirming coincidence of data with respect to a sub-block $X_1^i$ (a black circle in Fig. 11) as the target of a $1^{st}$ sub-round process configuring the $i^{th}$ executed round process in partial-matching described in the "Preimage Attacks on One-Block MD4, 63-Step MD5 and More," document as shown in Fig. 11 will be assumed. That is, a data length (a data size) m to be subjected to confirmation of coincidence in partial matching is b/d bits.

In this case, a portion shown with a dotted line in Fig. 11 is not used in meet-in-the-middle attack. That is, with respect to Nyberg's GFS, a non-use number U as the number of round functions that are not used in meet-in-the-middle attack is expressed by Formula 25:

[Formula 25]

$$U = \frac{d}{2} \times \left(\frac{d}{2} - 1\right) \times 2 + \frac{d}{2} \times 2 = \frac{d^2}{2}$$

Therefore, in order to specify an authentic key by performing meet-in-the-middle attack, there is a need to execute conversion of data with the round function F r·d/2-U times with respect to each L-bit key. That is, a calculation amount required to specify an authentic key by performing meet-in-the-middle attack increases in direct proportion to a ratio (r-2U/d)/r of a value r·d/2-U obtained by subtracting the specified non-use number U from a total number r·d/2 of round functions to the total number r·d/2, and also increases in direct proportion to a power $2^L$, where the base number is 2 and the exponent is the key size L.

Therefore, it can be said that the security index value S in Formula 19 well indicates a calculation amount required to specify an authentic key by performing meet-in-the-middle attack.

A calculation amount in confirmation of coincidence of data with respect to a sub-block $x_j^i$ (where j denotes an odd number that is more than 1 and less than d-1) as the target of the $j^{th}$ sub-round process configuring the $i^{th}$ executed round process is equal to a calculation amount in the abovementioned case.

Meanwhile, a calculation amount in confirmation of coincidence of data with respect to the sub-block $x^i_j$ (where j denotes an even number that is equal to or more than 0 and less than d-1) as the target of the $j^{th}$ sub-round process configuring the $i^{th}$ executed round process is more than a calculation amount in confirmation of coincidence of data with respect to the sub-block $x^i_1$ as the target of the $1^{st}$ sub-round process configuring the $i^{th}$ executed round process, and therefore, a description thereof will be omitted.

Thus, the security index value calculating part 12 specifies a non-use number based on structure specification information and calculates, as a security index value, a product of a ratio of a value obtained by subtracting the specified non-use number from the total number of round functions included in the structure of a block cipher to the total number and a power $2^L$, where the base number is 2 and the exponent is a key size L.

<<Target-Heavy GFS>>

In a case where the type of a structure represented by structure specification information accepted by the structure specification information accepting part 11 is Target-Heavy GFS as a type of GFS, the security index value calculating part 12 calculates a security index value S based on Formula 26 using a key size L and a round number r:

[Formula 26]

$$ S = 2^L \times \frac{r-1}{r} \qquad \text{where} \qquad r \geq 1 $$

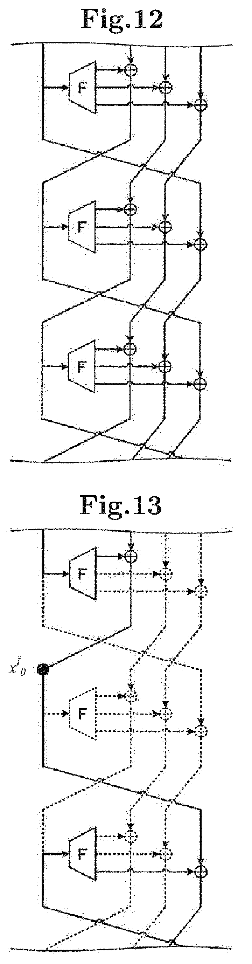

A method for deriving Formula 26 will be described. Target-Heavy GFS has a structure as shown in Fig. 12. For example, Target-Heavy GFS is MARS described in IBM Corporation, "MARS - A Candidate Cipher for AES," [online], 1999, IBM Corporation, [searched on January 9, 2012], Internet<URL: http://domino.re-search.ibm.com/comm/research_projects.nsf/pages/security.mars.html>.

In the example shown in Fig. 12, the division number d is 4. In other words, one sub-block is b/4-bit data. Moreover, in this example, a round function F is a function that converts b/d-bit data with each bit indicating 0 or 1 into b-(d-1)/d-bit data with each bit indicating 0 or 1 (i.e., $\{0;1\}^{b/d} \rightarrow \{0;1\}^{b(d-1)/d}$). The round function is also referred to as an F function.

Further, the round function F is expressed by F = ($F_0$, $F_1$, ..., $F_{d-2}$). In other words, the round function F is composed of d-1 number of sub-round functions $F_j$ (where j denotes an integer that is equal to or more than 0 and less than d-1).

Herein, a relation between a key (a round key) $k_i$ used in an $i^{th}$ executed round process and a sub-round key $k_{i,j}$ generated by dividing the round key $k_i$ into d portions on the condition that a round number is r will be defined as shown by Formula 27, where j denotes an integer that is equal to or more than 0 and equal to or less than d-1:

[Formula 27]

$$ k_i = k_{i,0}|k_{i,1}|\cdots|k_{i,d-1} \qquad \text{where} \qquad 0 \leq i \leq r-1 $$

A $j^{th}$ sub-round process configuring the $i^{th}$ executed round process is expressed by Formula 28, where j denotes an integer that is equal to or more than 0 and less than d-1. Moreover, a $(d-1)^{th}$ sub-round process configuring the $i^{th}$ executed round process is expressed by Formula 29.

[Formula 28]

$$ x^{i+1}_j = F_j\left(x^i_0 \oplus k_{i,j}\right) \oplus x^i_{j+1} \qquad \text{where} \qquad 0 \leq j < d-1 $$

[Formula 29]

$$x_{d-1}^{i+1} = x_0^i$$

Next, meet-in-the-middle attack on the block cipher having Target-Heavy GFS will be considered. A case of confirming coincidence of data with respect to a sub-block $x_0^i$ (a black circle in Fig. 13) as the target of a 0th sub-round process configuring the ith executed round process in partial-matching described in the "Preimage Attacks on One-Block MD4, 63-Step MD5 and More," document as shown in Fig. 13 will be assumed. That is, a data length (a data size) m of data to be subjected to confirmation of coincidence in partial matching is b/d bits.

In this case, a portion shown with a dotted line in Fig. 13 is not used in meet-in-the-middle attack. That is, with respect to Target-Heavy GFS, a non-use number U as the number of round functions that are not used in meet-in-the-middle attack is 1.

Therefore, in order to specify an authentic key by performing meet-in-the-middle attack, there is a need to execute conversion of data with the round function F r-1 times with respect to each L-bit key. That is, a calculation amount required to specify an authentic key by performing meet-in-the-middle attack increases in direct proportion to a ratio (r-1)/r of a value r-1 obtained by subtracting the specified non-use number 1 from the total number r of round functions to the total number r, and also increases in direct proportion to a power $2^L$, where the base number is 2 the exponent is the key size L.

Therefore, it can be said that the security index value S in Formula 26 well indicates a calculation amount required to specify an authentic key by performing meet-in-the-middle attack.

A calculation amount in confirmation of coincidence of data with respect to a sub-block $x_{d-1}^i$ as the target of the (d-1)th sub-round process configuring the ith executed round process is equal to a calculation amount in confirmation of coincidence of data with respect to a sub-block $X_0^{i-1}$ as the target of a 0th sub-round process configuring a (i-1)th round process, and therefore, is described in the same manner.

Meanwhile, a calculation amount in confirmation of coincidence of data with respect to a sub-block $x_j^i$ (where j denotes an integer that is more than 0 and less than d-1) as the target of the jth sub-round process configuring the ith executed round process is more than a calculation amount in confirmation of coincidence of data with respect to the sub-block $x_0^i$ as the target of the 0th sub-round process configuring the ith executed round process, and therefore, a description thereof will be omitted.

Thus, the security index value calculating part 12 specifies a non-use number based on structure specification information and calculates, as a security index value, a product of a ratio of a value obtained by subtracting the specified non-use number from the total number of round functions included in the structure of a block cipher to the total number and a power $2^L$, where the base number is 2 and the exponent is a key size L.

«Source-Heavy GFS»

In a case where the type of a structure represented by structure specification information accepted by the structure specification information accepting part 11 is Source-Heavy GFS as a type of GFS, the security index value calculating part 12 calculates a security index value S based on Formula 30 using a key size L, a round number r, and a division number d:

[Formula 30]

$$S = 2^L \times \frac{r-(d-1)}{r} \qquad \text{where} \qquad r \geq d - 1$$

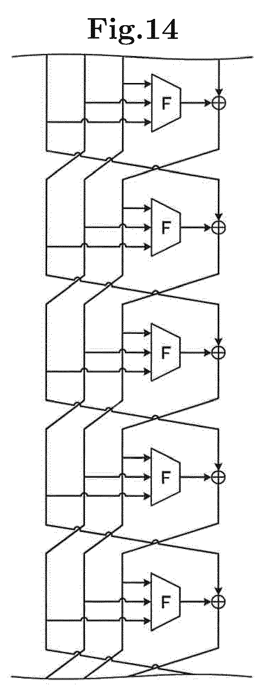

A method for deriving Formula 30 will be described. Source-Heavy GFS has a structure as shown in Fig. 14. For example, Source-Heavy GFS is SPEED described in Y. Zheng, "The SPEED Cipher," FC 1997, LNCS 1318, Springer, 1997, pp.71-90.

In the example shown in Fig. 14, the division number d is 4. In other words, one sub-block is b/4-bit data. Moreover, in this example, a round function F is a function that converts b·(d-1)/d-bit data with each bit indicating 0 or 1 into b/d-bit data with each bit indicating 0 or 1 (i.e., $\{0;1\}^{b(d-1)/d} \rightarrow \{0;1\}^{b/d}$). The round function is also referred to as an F function.

Herein, a relation between a key (a round key) $k_i$ used in an ith executed round process and a sub-round key $k_{i,j}$ generated by dividing the round key $k_i$ into d portions on the condition that a round number is r will be defined as shown by Formula 31, where j denotes an integer that is equal to or more than 0 and equal to or less than d-1:

[Formula 31]

$$k_i = k_{i,0}|k_{i,1}|\cdots|k_{i,d-1} \quad \text{where} \quad 0 \leq i \leq r-1$$

A $j^{th}$ sub-round process configuring the $i^{th}$ executed round process is expressed by Formula 32, where j denotes an integer other than d-2 among integers that are equal to or more than 0 and equal to or less than d-1. Moreover, a (d-2)$^{th}$ sub-round process configuring the $i^{th}$ executed round process is expressed by Formula 33.

[Formula 32]

$$x_j^{i+1} = x_{(j+1)\%d}^i \quad \text{where} \quad j \neq d-2$$

[Formula 33]

$$x_{d-2}^{i+1} = F\left(x_0^i \oplus k_{i,0}, x_1^i \oplus k_{i,1}, \cdots, x_{d-2}^i \oplus k_{i,d-2}\right) \oplus x_{d-1}^i$$

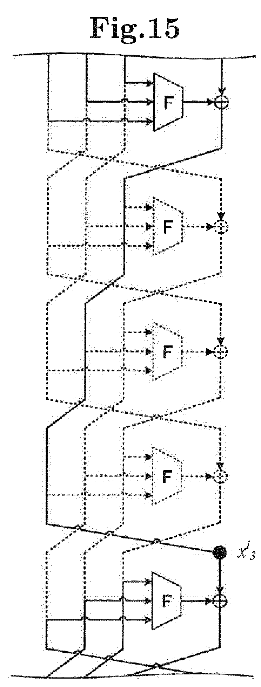

Next, meet-in-the-middle attack on the block cipher having Source-Heavy GFS will be considered. A case of confirming coincidence of data with respect to a sub-block $x_{d-1}^i$ (a black circle in Fig. 15) as the target of a (d-1)$^{th}$ sub-round process configuring the $i^{th}$ executed round process in partial-matching described in the "Preimage Attacks on One-Block MD4, 63-Step MD5 and More," document as shown in Fig. 15 will be assumed. That is, a data length (a data size) m of data to be subjected to confirmation of coincidence in partial matching is b/d bits.

In this case, a portion shown with a dotted line in Fig. 15 is not used in meet-in-the-middle attack. That is, with respect to Source-Heavy GFS, a non-use number as the number of round functions that are not used in meet-in-the-middle attack is d-1.

Therefore, in order to specify an authentic key by performing meet-in-the-middle attack, there is a need to execute conversion of data with the round function F r-(d-1) times with respect to each L-bit key. That is, a calculation amount required to specify an authentic key by performing meet-in-the-middle attack increases in direct proportion to a ratio {r-(d-1)}/r of a value r-(d-1) obtained by subtracting the specified non-use number d-1 from the total number r of round functions to the total number r, and also increases in direct proportion to a power $2^L$, where the base number is 2 and the exponent is the key size L.

Therefore, it can be said that the security index value S in Formula 30 well indicates a calculation amount required to specify an authentic key by performing meet-in-the-middle attack.

A calculation amount in confirmation of coincidence of data with respect to a sub-block $x_j^i$ (where j denotes an integer that is equal to or more than 0 and less than d-1) as the target of the $j^{th}$ sub-round process configuring the $i^{th}$ executed round process is equal to a calculation amount in confirmation of coincidence of data with respect to a sub-block $x_{d-1}^{i+j+1}$ as the target of a (d-1)$^{th}$ sub-round process configuring a (i+j+1)$^{th}$ executed round process, and therefore, is described in the same manner.

Thus, the security index value calculating part 12 specifies a non-use number based on structure specification information and calculates, as a security index value, a product of a ratio of a value obtained by subtracting the specified non-use number from the total number of round functions included in the structure of a block cipher to the total number and a power $2^L$, where the base number is 2 and the exponent is a key size L.

«Unbalanced GFS»

In a case where the type of a structure represented by structure specification information accepted by the structure specification information accepting part 11 is Unbalanced GFS as a type of GFS, the security index value calculating part 12 calculates a security index value S based on Formula 34 using a key size L, a round number r, and a division number d:

[Formula 34]

$$S = 2^L \times \frac{r-(d-1)}{r} \quad \text{where} \quad r \geq d-1$$

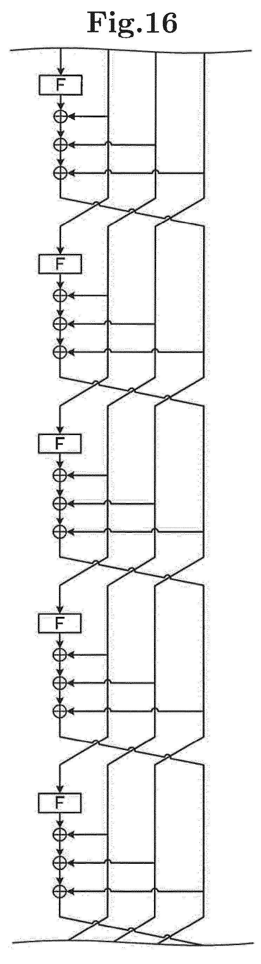

A method for deriving Formula 34 will be described. Unbalanced GFS is described in J. choy, G. Chew, K. Khoo, H. Yap, "Cryptographic Properties and Application of a Generalized Unbalanced Feistel Network Structure (Revised Version)," IACR Cryptology ePrint Archive, 2009, 2009-178. Moreover, Unbalanced GFS has a structure as shown in Fig. 16.
In the example shown in Fig. 16, the division number d is 4. In other words, one sub-block is b/4-bit data. Moreover, in this example, a round function F is a bijective function that converts b/d-bit data with each bit indicating 0 or 1 into b/d-bit data with each bit indicating 0 or 1 (i.e., $\{0;1\}^{b/d} \rightarrow \{0;1\}^{b/d}$). The round function is also referred to as an F function.
A $j^{th}$ sub-round process configuring an $i^{th}$ executed round process is expressed by Formula 35, where j denotes an integer that is equal to or more than 0 and equal to or less than d-2. Moreover, a $(d-1)^{th}$ sub-round process configuring the $i^{th}$ executed round process is expressed by Formula 36.

[Formula 35]

$$x_j^{i+1} = x_{j+1}^i \quad \text{where} \quad 0 \leq j \leq d-2$$

[Formula 36]

$$x_{d-1}^{i+1} = F\left(x_0^i \oplus k_i\right) \oplus x_1^i \oplus x_2^i \oplus \cdots \oplus x_{d-1}^i$$

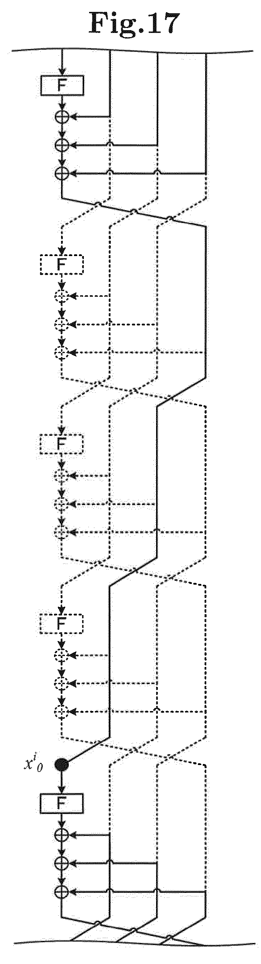

Herein, $k_i$ denotes a key (a round key) used in the $i^{th}$ executed round process.
Next, meet-in-the-middle attack on the block cipher having Unbalanced GFS will be considered. A case of confirming coincidence of data with respect to a sub-block $x_0^i$ (a black circle in Fig. 17) as the target of a $0^{th}$ sub-round process configuring the $i^{th}$ executed round process in partial-matching described in the "Preimage Attacks on One-Block MD4, 63-Step MD5 and More," document as shown in Fig. 17 will be assumed. That is, a data length (a data size) m of data to be subjected to confirmation of coincidence in partial matching is b/d bits.
In this case, a portion shown with a dotted line in Fig. 17 is not used in meet-in-the-middle attack. That is, with respect to Unbalanced GFS, a non-use number as the number of round functions that are not used in meet-in-the-middle attack is d-1.
Therefore, in order to specify an authentic key by performing meet-in-the-middle attack, there is a need to execute conversion of data with the round function F r-(d-1) times with respect to each L-bit key. That is, a calculation amount required to specify an authentic key by performing meet-in-the-middle attack increases in direct proportion to a ratio {r-(d-1)}/r of a value r-(d-1) obtained by subtracting the specified non-use number d-1 from the total number r of round functions to the total number r, and also increases in direct proportion to a power $2^L$, where the base number is 2 and the exponent is the key size L.
Therefore, it can be said that the security index value S in Formula 34 well indicates a calculation amount required to specify an authentic key by performing meet-in-the-middle attack.
A calculation amount in confirmation of coincidence of data with respect to a sub-block $x_j^i$ (where j denotes an integer that is more than 0 and equal to or less than d-1) as the target of the $j^{th}$ sub-round process configuring the $i^{th}$ executed round process is equal to a calculation amount in confirmation of coincidence of data with respect to a sub-block $x_0^{i+j}$ as the target of a $0^{th}$ sub-round process configuring a $(i+j)^{th}$ round process, and therefore, is described in the same manner.
Thus, the security index value calculating part 12 specifies a non-use number based on structure specification information and calculates, as a security index value, a product of a ratio of a value obtained by subtracting the specified non-use number from the total number of round functions included in the structure of the block cipher to the total number and power $2^L$, where the base number is 2 and the exponent is a size L.

(Operation)

Next, an operation of the abovementioned encryption evaluation device 1 will be described.

First, the encryption evaluation device 1 accepts structure specification information inputted by the user. Next, the encryption evaluation device 1 calculates a security index value based on the accepted structure specification information. Then, the encryption evaluation device 1 outputs the calculated security index value.

As described above, the encryption evaluation device 1 according to the first exemplary embodiment of the present invention can speedily calculate a security index value that indicates a calculation amount required to specify an authentic key by performing meet-in-the-middle attack.

A round function is an F function in the encryption evaluation device 1 according to the first exemplary embodiment, but may be a component, such as an S-box, that converts data.

<Second Exemplary Embodiment>

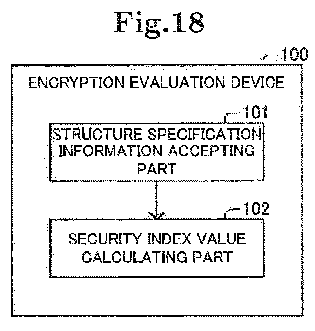

Next, an encryption evaluation device according to a second exemplary embodiment of the present invention will be described referring to Fig. 18.

An encryption evaluation device 100 according to the second exemplary embodiment is a device which evaluates the security of a block cipher encrypting data of a predetermined size for each block by repeatedly executing, a predetermined number of rounds, a round process using a round function converting data based on a key.

Moreover, this encryption evaluation device 100 includes:

a structure specification information accepting part (a structure specification information accepting means) 101 configured to accept structure specification information for specifying the structure of the block cipher; and

a security index value calculating part (a security index value calculating means) 102 configured to specify a non-use number that is the number of round functions that are not used in meet-in-the-middle attack based on the accepted structure specification information, and calculate a security index value that indicates a calculation amount required to specify the key by performing the meet-in-the-middle attack, based on the specified non-use number.

According to this, it is possible to speedily calculate a security index value indicating a calculation amount required to specify an authentic key by performing meet-in-the-middle attack.

Although the present invention has been described above referring to the exemplary embodiments, the present invention is not limited to the exemplary embodiments. The configurations and details of the present invention can be changed and modified in various manners that can be understood by one skilled in the art within the scope of the present invention.

Each of the functions of the encryption evaluation device is realized by execution of a program (software) by the CPU in each of the exemplary embodiments described above, but may be realized by hardware such as a circuit.

Further, the program is stored in the storage device in each of the exemplary embodiments described above, but may be stored in a computer-readable recording medium. For example, the recording medium is a portable medium such as a flexible disk, an optical disk, a magneto-optical disk, and a semiconductor memory.

Further, as another modified example of the exemplary embodiments, any combination of the abovementioned exemplary embodiments and modified examples may be employed.

<Supplementary Notes>

The whole or part of the exemplary embodiments disclosed above can be described as, but not limited to, the following supplementary notes.

(Supplementary Note 1)

An encryption evaluation device evaluating security of a block cipher encrypting data of a predetermined size for each block by repeatedly executing a round process a predetermined number of rounds, the round process using a round function converting data based on a key, the encryption evaluation device comprising:

a structure specification information accepting means for accepting structure specification information for specifying a structure of the block cipher; and

a security index value calculating means for specifying a non-use number as a number of round functions that are not used in meet-in-the-middle attack, based on the accepted structure specification information, and calculating a security index value indicating a calculation amount required to specify the key by performing the meet-in-the-middle

**16**

attack, based on the specified non-use number.

According to this, it is possible to speedily calculate a security index value indicating a calculation amount that is required to specify an authentic key by performing meet-in-the-middle attack.

(Supplementary Note 2)

The encryption evaluation device according to Supplementary Note 1, wherein the security index value calculating means is configured to calculate the security index value based on a ratio of a value obtained by subtracting the specified non-use number from a total number of round functions included by the structure of the block cipher to the total number.

A ratio of a value obtained by subtracting the non-use number from the total number of round functions included in the structure of the block cipher to the total number well indicates a calculation amount that is required to specify a key by performing meet-in-the-middle attack. Therefore, according to the encryption evaluation device configured as described above, it is possible to calculate a security index value well indicating the calculation amount.

(Supplementary Note 3)

The encryption evaluation device according to Supplementary Note 1 or 2, wherein the security index value calculating means is configured to calculate the security index value based on a power $2^L$, where a base number is 2 and an exponent is a size L of the key.

The power $2^L$ well indicates a calculation amount that is required to specify a key by performing meet-in-the-middle attack. Therefore, according to the encryption evaluation device configured as described above, it is possible to calculate a security index value well indicating the calculation amount.

(Supplementary Note 4)

The encryption evaluation device according to any of Supplementary Notes 1 to 3, wherein:

in the structure, the round process is configured by sub-round processes for respective sub-blocks obtained by dividing the block into a predetermined division number; and
the structure specification information includes information representing a type of the structure and information representing at least one of the round number and the division number.

(Supplementary Note 5)

The encryption evaluation device according to any of Supplementary Notes 1 to 4, wherein a type of the structure of the block cipher is a Feistel Structure (FS) or a Generalized Feistel Structure (GFS).

(Supplementary Note 6)

The encryption evaluation device according to Supplementary Note 5, wherein the security index value calculating means is configured to, in a case where the type of the structure represented by the accepted structure specification information is FS, calculate the security index value S based on following Formula (37) using the size L of the key and the round number r:

[Formula 37]

$$S = 2^L \times \frac{r-1}{r} \qquad \text{where} \qquad r \geq 1$$

(Supplementary Note 7)

The encryption evaluation device according to Supplementary Note 5, wherein:

in the structure, the round process is configured by sub-round processes for respective sub-blocks obtained by dividing the block into a predetermined division number; and

the security index value calculating means is configured to, in a case where the type of the structure represented by the accepted structure specification information is GFS Type-1, calculate the security index value S based on following Formula (38) using the size L of the key, the round number r, and the division number d:

[Formula 38]

$$S = 2^L \times \frac{r - \frac{d(d-1)}{2}}{r} \qquad \text{where} \qquad r \geq (d-1)^2$$

(Supplementary Note 8)

The encryption evaluation device according to Supplementary Note 5, wherein:

in the structure, the round process is configured by sub-round processes for respective sub-blocks obtained by dividing the block into a predetermined division number; and
the security index value calculating means is configured to, in a case where the type of the structure represented by the accepted structure specification information is GFS Type-2, calculate the security index value S based on following Formula (39) using the size L of the key, the round number r, and the division number d:

[Formula 39]

$$S = 2^L \times \frac{r - (d-1)}{r}$$

where $r \geq 2d - 3$

(Supplementary Note 9)

The encryption evaluation device according to Supplementary Note 5, wherein:

in the structure, the round process is configured by sub-round processes for respective sub-blocks obtained by dividing the block into a predetermined division number; and
the security index value calculating means is configured to, in a case where the type of the structure represented by the accepted structure specification information is GFS Type-3, calculate the security index value S based on following Formula (40) using the size L of the key, the round number r, and the division number d:

[Formula 40]

$$S = 2^L \times \frac{r - \frac{d}{2}}{r}$$

where $r \geq d - 1$

(Supplementary Note 10)

The encryption evaluation device according to Supplementary Note 5, wherein:

in the structure, the round process is configured by sub-round processes for respective sub-blocks obtained by dividing the block into a predetermined division number; and
the security index value calculating means is configured to, in a case where the type of the structure represented by the accepted structure specification information is Nyberg's GFS, calculate the security index value S based on following Formula (41) using the size L of the key, the round number r, and the division number d:

[Formula 41]

$$S = 2^L \times \frac{r-d}{r}$$

where $r \geq \frac{3}{2}d$

(Supplementary Note 11)

The encryption evaluation device according to Supplementary Note 5, wherein:

in the structure, the round process is configured by sub-round processes for respective sub-blocks obtained by dividing the block into a predetermined division number; and
the security index value calculating means is configured to, in a case where the type of the structure represented by the accepted structure specification information is Target-Heavy GFS, calculate the security index value S based on following Formula (42) using the size L of the key and the round number r:

[Formula 42]

$$S = 2^L \times \frac{r-1}{r}$$

where $r \geq 1$

(Supplementary Note 12)

The encryption evaluation device according to Supplementary Note 5, wherein:

in the structure, the round process is configured by sub-round processes for respective sub-blocks obtained by dividing the block into a predetermined division number; and
the security index value calculating means is configured to, in a case where the type of the structure represented by the accepted structure specification information is Source-Heavy GFS, calculate the security index value S based on following Formula (43) using the size L of the key, the round number r, and the division number d:

[Formula 43]

$$S = 2^L \times \frac{r-(d-1)}{r}$$

where $r \geq d - 1$

(Supplementary Note 13)

The encryption evaluation device according to Supplementary Note 5, wherein:

in the structure, the round process is configured by sub-round processes for respective sub-blocks obtained by dividing the block into a predetermined division number; and
the security index value calculating means is configured to, in a case where the type of the structure represented by the accepted structure specification information is Unbalanced GFS, calculate the security index value S based on following Formula (44) using the size L of the key, the round number r, and the division number d:

## [Formula 44]

$$S = 2^L \times \frac{r-(d-1)}{r}$$

where $r \geq d - 1$

(Supplementary Note 14)

An encryption evaluation method for evaluating security of a block cipher encrypting data of a predetermined size for each block by repeatedly executing a round process a predetermined number of rounds, the round process using a round function converting data based on a key, the encryption evaluation method comprising:

accepting structure specification information for specifying a structure of the block cipher; and
specifying a non-use number as a number of round functions that are not used in meet-in-the-middle attack, based on the accepted structure specification information, and calculating a security index value indicating a calculation amount required to specify the key by performing the meet-in-the-middle attack, based on the specified non-use number.

(Supplementary Note 15)

The encryption evaluation method according to Supplementary Note 14, comprising calculating the security index value based on a ratio of a value obtained by subtracting the specified non-use number from a total number of round functions included by the structure of the block cipher to the total number.

(Supplementary Note 16)

An encryption evaluation program comprising instructions for causing an encryption evaluation device to perform operations, the encryption evaluation device evaluating security of a block cipher encrypting data of a predetermined size for each block by repeatedly executing a round process a predetermined number of rounds, the round process using a round function converting data based on a key, and the operations including:

accepting structure specification information for specifying a structure of the block cipher; and
specifying a non-use number as a number of round functions that are not used in meet-in-the-middle attack, based on the accepted structure specification information, and calculating a security index value indicating a calculation amount required to specify the key by performing the meet-in-the-middle attack, based on the specified non-use number.

(Supplementary Note 17)

The encryption evaluation program according to Supplementary Note 16, comprising instructions for causing the encryption evaluation device to calculate the security index value based on a ratio of a value obtained by subtracting the specified non-use number from a total number of round functions included by the structure of the block cipher to the total number.

The DESCRIPTION OF REFERENCE NUMERALS

| | |
|---|---|
| 1 | encryption evaluation device |
| 11 | structure specification information accepting part |
| 12 | security index value calculating part |
| 13 | evaluation outputting part |
| 100 | encryption evaluation device |
| 101 | structure specification information accepting part |
| 102 | security index value calculating part |

**Claims**

1. An encryption evaluation device (1, 100) for evaluating security of a block cipher encrypting data of a predetermined size for each block by repeatedly executing a round process a predetermined number of rounds, the round process using a round function converting data based on a key, the encryption evaluation device comprising:

    a structure specification information accepting means (11, 101) for accepting structure specification information for specifying a structure of the block cipher; and
    a security index value calculating (12, 102) for specifying a non-use number as a number of round functions that are not used in meet-in-the-middle attack, based on the accepted structure specification information, and calculating a security index value indicating a calculation amount required to specify the key by performing the meet-in-the-middle attack, based on the specified non-use number.

2. The encryption evaluation device according to Claim 1, wherein the security index value calculating means is configured to calculate the security index value based on a ratio of a value obtained by subtracting the specified non-use number from a total number of round functions included by the structure of the block cipher to the total number.

3. The encryption evaluation device according to Claim 1 or 2, wherein the security index value calculating means is configured to calculate the security index value based on a power $2^L$, where a base number is 2 and an exponent is a size L of the key.

4. The encryption evaluation device according to any of Claims 1 to 3, wherein:

    in the structure, the round process is configured by sub-round processes for respective sub-blocks obtained by dividing the block into a predetermined division number; and
    the structure specification information includes information representing a type of the structure and information representing at least one of the round number and the division number.

5. The encryption evaluation device according to any of Claims 1 to 4, wherein a type of the structure of the block cipher is a Feistel Structure (FS) or a Generalized Feistel Structure (GFS).

6. The encryption evaluation device according to Claim 5, wherein the security index value calculating means is configured to, in a case where the type of the structure represented by the accepted structure specification information is FS, calculate the security index value S based on following Formula (45) using the size L of the key and the round number r:

[Formula 45]

$$S = 2^L \times \frac{r-1}{r}$$

where $r \geq 1$

7. The encryption evaluation device according to Claim 5, wherein:

    in the structure, the round process is configured by sub-round processes for respective sub-blocks obtained by dividing the block into a predetermined division number; and
    the security index value calculating means is configured to, in a case where the type of the structure represented by the accepted structure specification information is GFS Type-1, calculate the security index value S based on following Formula (46) using the size L of the key, the round number r, and the division number d:

[Formula 46]

$$S = 2^L \times \frac{r - \frac{d(d-1)}{2}}{r}$$

where $r \geq (d - 1)^2$

8. The encryption evaluation device according to Claim 5, wherein:

in the structure, the round process is configured by sub-round processes for respective sub-blocks obtained by dividing the block into a predetermined division number; and
the security index value calculating means is configured to, in a case where the type of the structure represented by the accepted structure specification information is GFS Type-2, calculate the security index value S based on following Formula (47) using the size L of the key, the round number r, and the division number d:

[Formula 47]

$$S = 2^L \times \frac{r-(d-1)}{r}$$

where $r \geq 2d - 3$

9. The encryption evaluation device according to Claim 5, wherein:

in the structure, the round process is configured by sub-round processes for respective sub-blocks obtained by dividing the block into a predetermined division number; and
the security index value calculating means is configured to, in a case where the type of the structure represented by the accepted structure specification information is GFS Type-3, calculate the security index value S based on following Formula (48) using the size L of the key, the round number r, and the division number d:

[Formula 48]

$$S = 2^L \times \frac{r-\frac{d}{2}}{r}$$

where $r \geq d - 1$

10. The encryption evaluation device according to Claim 5, wherein:

in the structure, the round process is configured by sub-round processes for respective sub-blocks obtained by dividing the block into a predetermined division number; and
the security index value calculating means is configured to, in a case where the type of the structure represented by the accepted structure specification information is Nyberg's GFS, calculate the security index value S based on following Formula (49) using the size L of the key, the round number r, and the division number d:

[Formula 49]

$$S = 2^L \times \frac{r-d}{r}$$

where $r \geq \frac{3}{2}d$

11. The encryption evaluation device according to Claim 5, wherein:

in the structure, the round process is configured by sub-round processes for respective sub-blocks obtained by dividing the block into a predetermined division number; and
the security index value calculating means is configured to, in a case where the type of the structure represented by the accepted structure specification information is Target-Heavy GFS, calculate the security index value S based on following Formula (50) using the size L of the key and the round number r:

[Formula 50]

$$S = 2^L \times \frac{r-1}{r}$$

where $r \geq 1$

12. The encryption evaluation device according to Claim 5, wherein:

in the structure, the round process is configured by sub-round processes for respective sub-blocks obtained by dividing the block into a predetermined division number; and
the security index value calculating means is configured to, in a case where the type of the structure represented by the accepted structure specification information is Source-Heavy GFS, calculate the security index value S based on following Formula (51) using the size L of the key, the round number r, and the division number d:

[Formula 51]

$$S = 2^L \times \frac{r-(d-1)}{r} \qquad \text{where} \qquad r \geq d - 1$$

13. The encryption evaluation device according to Claim 5, wherein:

in the structure, the round process is configured by sub-round processes for respective sub-blocks obtained by dividing the block into a predetermined division number; and
the security index value calculating means is configured to, in a case where the type of the structure represented by the accepted structure specification information is Unbalanced GFS, calculate the security index value S based on following Formula (52) using the size L of the key, the round number r, and the division number d:

[Formula 52]

$$S = 2^L \times \frac{r-(d-1)}{r} \qquad \text{where} \qquad r \geq d - 1$$

14. An encryption evaluation method for evaluating security of a block cipher encrypting data of a predetermined size for each block by repeatedly executing a round process a predetermined number of rounds, the round process using a round function converting data based on a key, the encryption evaluation method comprising:

accepting (11, 101) structure specification information for specifying a structure of the block cipher; and
specifying (12, 102) a non-use number as a number of round functions that are not used in meet-in-the-middle attack, based on the accepted structure specification information, and calculating a security index value indicating a calculation amount required to specify the key by performing the meet-in-the-middle attack, based on the specified non-use number.

15. The encryption evaluation method according to Claim 14, comprising calculating the security index value based on a ratio of a value obtained by subtracting the specified non-use number from a total number of round functions included by the structure of the block cipher to the total number.

16. An encryption evaluation program comprising instructions for causing an encryption evaluation device to perform operations, the encryption evaluation device evaluating security of a block cipher encrypting data of a predetermined size for each block by repeatedly executing a round process a predetermined number of rounds, the round process using a round function converting data based on a key, and the operations including:

accepting (11, 101) structure specification information for specifying a structure of the block cipher; and
specifying (12, 102) a non-use number as a number of round functions that are not used in meet-in-the-middle attack, based on the accepted structure specification information, and calculating a security index value indicating a calculation amount required to specify the key by performing the meet-in-the-middle attack, based on the specified non-use number.

17. The encryption evaluation program according to Claim 16, comprising instructions for causing the encryption evaluation device to calculate the security index value based on a ratio of a value obtained by subtracting the specified non-use number from a total number of round functions included by the structure of the block cipher to the total number.

**Patentansprüche**

1. Verschlüsselungsbeurteilungsvorrichtung (1, 100) zum Beurteilen der Sicherheit eines Block-Cipher zum Verschlüsseln von Daten einer vorbestimmten Größe für jeden Block durch wiederholtes Ausführen eines Rundenprozesses für eine vorbestimmte Anzahl von Runden, wobei der Rundenprozess eine Rundenfunktion zum Umwandeln von Daten auf der Basis eines Schlüssels benutzt, wobei die Verschlüsselungsbeurteilungsvorrichtung Folgendes umfasst:

   ein Strukturspezifikationsinformationen-Akzeptiermittel (11, 101) zum Akzeptieren von Strukturspezifikationsinformationen zum Spezifizieren einer Struktur des Block-Cipher; und
   ein Sicherheitsindexwert-Berechnungsmittel (12, 102) zum Spezifizieren einer Nichtgebrauchszahl als Anzahl von Rundenfunktionen, die in einer Meet-in-the-Middle-Attacke nicht benutzt werden, auf der Basis der akzeptierten Strukturspezifikationsinformationen, und zum Berechnen eines Sicherheitsindexwertes, der eine Berechnungsmenge anzeigt, die zum Spezifizieren des Schlüssels nötig ist, durch Ausführen der Meet-in-the-Middle-Attacke, auf der Basis der vorgegebenen Nichtgebrauchszahl.

2. Verschlüsselungsbeurteilungsvorrichtung nach Anspruch 1, wobei das Sicherheitsindexwert-Berechnungsmittel konfiguriert ist zum Berechnen des Sicherheitsindexwertes auf der Basis eines Verhältnisses zwischen einem Wert, der durch Subtrahieren der spezifizierten Nichtgebrauchszahl von einer Gesamtzahl von von der Struktur des Block-Cipher einbezogenen Rundenfunktionen erhalten wird, und der Gesamtzahl.

3. Verschlüsselungsbeurteilungsvorrichtung nach Anspruch 1 oder 2, wobei das Sicherheitsindexwert-Berechnungsmittel konfiguriert ist zum Berechnen des Sicherheitsindexwertes auf der Basis einer Potenz $2^L$, wobei eine Basiszahl 2 ist und ein Exponent eine Größe L des Schlüssels ist.

4. Verschlüsselungsbeurteilungsvorrichtung nach einem der Ansprüche 1 bis 3, wobei:

   in der Struktur der Rundenprozess durch Subrundenprozesse für jeweilige Subblöcke konfiguriert ist, die durch Unterteilen des Blocks in eine vorbestimmte Teilungszahl erhalten werden; und
   die Strukturspezifikationsinformationen einen Typ der Struktur repräsentierende Informationen und die Rundenzahl und/oder die Teilungszahl repräsentierende Informationen beinhalten.

5. Verschlüsselungsbeurteilungsvorrichtung nach einem der Ansprüche 1 bis 4, wobei ein Typ der Struktur des Block-Cipher eine Feistel-Struktur (FS) oder eine generalisierte Feistel-Struktur (GFS) ist.

6. Verschlüsselungsbeurteilungsvorrichtung nach Anspruch 5, wobei das Sicherheitsindexwert-Berechnungsmittel so konfiguriert ist, dass es in einem Fall, in dem der durch die akzeptierten Strukturspezifikationsinformationen repräsentierte Typ der Struktur FS ist, den Sicherheitsindexwert S auf der Basis der folgenden Formel (45) unter Verwendung der Größe L des Schlüssels und der Rundenzahl r berechnet:

[Formel 45]

$$S = 2^L \times \frac{r-1}{r} \quad \text{wobei} \quad r \geq 1.$$

7. Verschlüsselungsbeurteilungsvorrichtung nach Anspruch 5, wobei:

   in der Struktur der Rundenprozess durch Subrundenprozesse für jeweilige Subblöcke konfiguriert ist, die durch Unterteilen des Blocks in eine vorbestimmte Teilungszahl erhalten werden; und

das Sicherheitsindexwert-Berechnungsmittel so konfiguriert ist, dass es in einem Fall, in dem der durch die akzeptierten Strukturspezifikationsinformationen repräsentierte Typ der Struktur GFS-Typ 1 ist, den Sicherheitsindexwert S auf der Basis der folgenden Formel (46) unter Verwendung der Größe L des Schlüssels, der Rundenzahl r und der Teilungszahl d berechnet:

[Formel 46]

$$S = 2^L \times \frac{r - \frac{d(d-1)}{2}}{r} \qquad \text{wobei} \qquad r \geq (d-1)^2 \quad .$$

**8.** Verschlüsselungsbeurteilungsvorrichtung nach Anspruch 5, wobei:

in der Struktur der Rundenprozess durch Subrundenprozesse für jeweilige Subblöcke konfiguriert ist, die durch Unterteilen des Blocks in eine vorbestimmte Teilungszahl erhalten werden; und
das Sicherheitsindexwert-Berechnungsmittel so konfiguriert ist, dass es in einem Fall, in dem der durch die akzeptierten Strukturspezifikationsinformationen repräsentierte Typ der Struktur GFS-Typ 2 ist, den Sicherheitsindexwert S auf der Basis der folgenden Formel (47) unter Verwendung der Größe L des Schlüssels, der Rundenzahl r und der Teilungszahl d berechnet:

[Formel 47]

$$S = 2^L \times \frac{r - (d-1)}{r} \qquad \text{wobei} \qquad r \geq 2d - 3 \quad .$$

**9.** Verschlüsselungsbeurteilungsvorrichtung nach Anspruch 5, wobei:

in der Struktur der Rundenprozess durch Subrundenprozesse für jeweilige Subblöcke konfiguriert ist, die durch Unterteilen des Blocks in eine vorbestimmte Teilungszahl erhalten werden; und
das Sicherheitsindexwert-Berechnungsmittel so konfiguriert ist, dass es in einem Fall, in dem der durch die akzeptierten Strukturspezifikationsinformationen repräsentierte Typ der Struktur GFS-Typ 3 ist, den Sicherheitsindexwert S auf der Basis der folgenden Formel (48) unter Verwendung der Größe L des Schlüssels, der Rundenzahl r und der Teilungszahl d berechnet:

[Formel 48]

$$S = 2^L \times \frac{r - \frac{d}{2}}{r} \qquad \text{wobei} \qquad r \geq d - 1 \quad .$$

**10.** Verschlüsselungsbeurteilungsvorrichtung nach Anspruch 5, wobei:

in der Struktur der Rundenprozess durch Subrundenprozesse für jeweilige Subblöcke konfiguriert ist, die durch Unterteilen des Blocks in eine vorbestimmte Teilungszahl erhalten werden; und
das Sicherheitsindexwert-Berechnungsmittel so konfiguriert ist, dass es in einem Fall, in dem der durch die akzeptierten Strukturspezifikationsinformationen repräsentierte Typ der Struktur Nybergs GFS ist, den Sicherheitsindexwert S auf der Basis der folgenden Formel (49) unter Verwendung der Größe L des Schlüssels, der Rundenzahl r und der Teilungszahl d berechnet:

[Formel 49]

$$S = 2^L \times \frac{r - d}{r} \qquad \text{wobei} \qquad r \geq \frac{3}{2}d \quad .$$

**11.** Verschlüsselungsbeurteilungsvorrichtung nach Anspruch 5, wobei:

in der Struktur der Rundenprozess durch Subrundenprozesse für jeweilige Subblöcke konfiguriert ist, die durch Unterteilen des Blocks in eine vorbestimmte Teilungszahl erhalten werden; und
das Sicherheitsindexwert-Berechnungsmittel so konfiguriert ist, dass es in einem Fall, in dem der durch die akzeptierten Strukturspezifikationsinformationen repräsentierte Typ der Struktur Target-Heavy GFS ist, den Sicherheitsindexwert S auf der Basis der folgenden Formel (50) unter Verwendung der Größe L des Schlüssels und der Rundenzahl r berechnet:

[Formel 50]

$$S = 2^L \times \frac{r-1}{r} \qquad \text{wobei} \qquad r \geq 1 \quad .$$

**12.** Verschlüsselungsbeurteilungsvorrichtung nach Anspruch 5, wobei:

in der Struktur der Rundenprozess durch Subrundenprozesse für jeweilige Subblöcke konfiguriert ist, die durch Unterteilen des Blocks in eine vorbestimmte Teilungszahl erhalten werden; und
das Sicherheitsindexwert-Berechnungsmittel so konfiguriert ist, dass es in einem Fall, in dem der durch die akzeptierten Strukturspezifikationsinformationen repräsentierte Typ der Struktur Source-Heavy GFS ist, den Sicherheitsindexwert S auf der Basis der folgenden Formel (51) unter Verwendung der Größe L des Schlüssels, der Rundenzahl r und der Teilungszahl d berechnet:

[Formel 51]

$$S = 2^L \times \frac{r-(d-1)}{r} \qquad \text{wobei} \qquad r \geq d-1 \quad .$$

**13.** Verschlüsselungsbeurteilungsvorrichtung nach Anspruch 5, wobei:

in der Struktur der Rundenprozess durch Subrundenprozesse für jeweilige Subblöcke konfiguriert ist, die durch Unterteilen des Blocks in eine vorbestimmte Teilungszahl erhalten werden; und
das Sicherheitsindexwert-Berechnungsmittel so konfiguriert ist, dass es in einem Fall, in dem der durch die akzeptierten Strukturspezifikationsinformationen repräsentierte Typ der Struktur Unbalanced GFS ist, den Sicherheitsindexwert S auf der Basis der folgenden Formel (52) unter Verwendung der Größe L des Schlüssels, der Rundenzahl r und der Divisionszahl d berechnet:

[Formel 52]

$$S = 2^L \times \frac{r-(d-1)}{r} \qquad \text{wobei} \qquad r \geq d-1 \quad .$$

**14.** Verschlüsselungsbeurteilungsverfahren zum Beurteilen der Sicherheit eines Block-Cipher, der Daten einer vorbestimmten Größe für jeden Block verschlüsselt, durch wiederholtes Ausführen eines Rundenprozesses für eine vorbestimmte Anzahl von Runden, wobei der Rundenprozess eine Rundenfunktion benutzt, die Daten auf der Basis eines Schlüssels umwandelt, wobei das Verschlüsselungsbeurteilungsverfahren Folgendes beinhaltet:

Akzeptieren (11, 101) von Strukturspezifikationsinformationen zum Spezifizieren einer Struktur des Block-Cipher; und
Spezifizieren (12, 102) einer Nichtgebrauchszahl als eine Zahl von Rundenfunktionen, die bei einer Meet-in-the-Middle-Attacke nicht benutzt werden, auf der Basis der akzeptierten Strukturspezifikationsinformationen, und Berechnen eines Sicherheitsindexwertes, der eine Berechnungsmenge anzeigt, die zum Spezifizieren des Schlüssels durch Ausführen der Meet-in-the-Middle-Attacke benötigt wird, auf der Basis der spezifizierten Nichtgebrauchszahl.

**15.** Verschlüsselungsbeurteilungsverfahren nach Anspruch 14, das das Berechnen des Sicherheitsindexwertes auf der Basis eines Verhältnisses zwischen einem durch Subtrahieren der vorgegebenen Nichtgebrauchszahl von einer durch die Struktur des Block-Cipher einbezogenen Gesamtzahl von Rundenfunktionen erhaltenen Wert und der Gesamtzahl beinhaltet.

**16.** Verschlüsselungsbeurteilungsprogramm, das Befehle enthält, um zu bewirken, dass eine Verschlüsselungsbeurteilungsvorrichtung Vorgänge durchführt, wobei die Verschlüsselungsbeurteilungsvorrichtung die Sicherheit eines Block-Cipher beurteilt, der Daten einer vorbestimmten Größe für jeden Block verschlüsselt, durch wiederholtes Ausführen eines Rundenprozesses für eine vorbestimmte Anzahl von Runden, wobei der Rundenprozess eine Rundenfunktion benutzt, die Daten auf der Basis eines Schlüssels konvertiert, und die Vorgänge Folgende beinhalten:

Akzeptieren (11, 101) von Strukturspezifikationsinformationen zum Spezifizieren einer Struktur des Block-Cipher; und

Spezifizieren (12, 102) einer Nichtgebrauchszahl als eine Anzahl von Rundenfunktionen, die nicht in der Meet-in-the-Middle-Attacke benutzt werden, auf der Basis der akzeptierten Strukturspezifikationsinformationen, und Berechnen eines Sicherheitsindexwertes, der eine Berechnungsmenge anzeigt, die zum Spezifizieren des Schlüssels benötigt wird, durch Durchführen der Meet-in-the-Middle-Attacke, auf der Basis der spezifizierten Nichtgebrauchszahl.

**17.** Verschlüsselungsbeurteilungsprogramm nach Anspruch 16, das Befehle enthält, um zu bewirken, dass die Verschlüsselungsbeurteilungsvorrichtung den Sicherheitsindexwert auf der Basis eines Verhältnisses zwischen einem durch Subtrahieren der vorgegebenen Nichtgebrauchszahl von einer durch die Struktur des Block-Cipher einbezogenen Gesamtzahl von Rundenfunktionen erhaltenen Wert und der Gesamtzahl berechnet.

**Revendications**

**1.** Dispositif d'évaluation de cryptage (1, 100) pour évaluer la sécurité d'un chiffrement par blocs en cryptant des données d'une taille prédéterminée pour chaque bloc en exécutant répétitivement un processus en tours un nombre de tours prédéterminé, le processus en tours utilisant des données de conversion de fonction de tour sur la base d'une clé, le dispositif d'évaluation de cryptage comprenant :

un moyen d'acceptation d'informations de spécification de structure (11, 101) pour accepter des informations de spécification de structure afin de spécifier une structure du chiffrement par blocs ; et calculer une valeur d'index de sécurité (12, 102) pour spécifier un nombre de non utilisations comme un nombre de fonctions de tour qui ne sont pas utilisées dans une attaque dite "meet-in-the-middle", sur la base des informations de spécification de structure acceptées, et calculer une valeur d'index de sécurité indiquant une quantité de calcul nécessaire pour spécifier la clé en effectuant une attaque dite "meet-in-the-middle", sur la base du nombre de non utilisations spécifié.

**2.** Dispositif d'évaluation de cryptage selon la revendication 1, dans lequel le moyen de calcul de la valeur d'index de sécurité est configuré pour calculer la valeur d'index de sécurité sur la base d'un rapport d'une valeur obtenue en soustrayant le nombre de non utilisations spécifié d'un nombre total de fonctions de tour inclus par la structure du chiffrement par blocs au nombre total.

**3.** Dispositif d'évaluation de cryptage selon la revendication 1 ou 2, dans lequel le moyen de calcul de la valeur d'index de sécurité est configuré pour calculer la valeur d'index de sécurité sur la base d'une puissance $2^L$, où un nombre de base de 2 et un exposant est une taille L de la clé.

**4.** Dispositif d'évaluation de cryptage selon l'une quelconque des revendications 1 à 3, dans lequel :

dans la structure, le processus en tours est configuré par des processus en sous-tours pour des sous-blocs respectifs obtenus en divisant le bloc en un nombre de divisions prédéterminé ; et les informations de spécification de structure comprennent des informations représentant un type de la structure et des informations représentant au moins l'un d'entre le nombre de tours et le nombre de divisions.

**5.** Dispositif d'évaluation de cryptage selon l'une quelconque des revendications 1 à 4, dans lequel un type de la structure du chiffrement par blocs est une structure de Feistel (FS) ou une structure de Feistel généralisée (GFS).

**6.** Dispositif d'évaluation de cryptage selon la revendication 5, dans lequel le moyen de calcul de la valeur d'index de sécurité est configuré pour : dans un cas dans lequel le type de la structure représentée par les informations de spécification de structure acceptées est le FS, calculer la valeur d'index de sécurité S sur la base de la Formule (45) suivante en utilisant la taille L de la clé et le nombre de tours r :

[Formule 45]

$$S = 2^L \times \frac{r-1}{r} \quad \text{où } r \geq 1$$

**7.** Dispositif d'évaluation de cryptage selon la revendication 5, dans lequel :

dans la structure, le processus en tours est configuré par des processus en sous-tours pour des sous-blocs respectifs obtenus en divisant le bloc en un nombre de divisions prédéterminé ; et
le moyen de calcul de la valeur d'index de sécurité est configuré pour, dans un cas dans lequel le type de la structure représentée par les informations de spécification de structure acceptées est le GSF type-1, calculer la valeur d'index de sécurité S sur la base de la Formule (46) suivante en utilisant la taille L de la clé, le nombre de tours r, et le nombre de divisions d :

[Formule 46]

$$S = 2^L \times \frac{r - \frac{d(d-1)}{2}}{r} \quad \text{où } r \geq (d-1)^2$$

**8.** Dispositif d'évaluation de cryptage selon la revendication 5, dans lequel :

dans la structure, le processus en tours est configuré par des processus en sous-tours pour des sous-blocs respectifs obtenus en divisant le bloc en un nombre de divisions prédéterminé ; et
le moyen de calcul de la valeur d'index de sécurité est configuré pour, dans un cas dans lequel le type de la structure représentée par les informations de spécification de structure acceptées est le GFS type-2, calculer la valeur d'index de sécurité S sur la base de la Formule (47) suivante en utilisant la taille L de la clé, le nombre de tours r et le nombre de divisions d :

[Formule 47]

$$S = 2^L \times \frac{r - (d-1)}{r} \quad \text{où } r \geq 2d - 3$$

**9.** Dispositif d'évaluation de cryptage selon la revendication 5, dans lequel :

dans la structure, le processus en tours est configuré par des processus en sous-tours pour des sous-blocs respectifs obtenus en divisant le bloc en un nombre de divisions prédéterminé ; et
le moyen de calcul de la valeur d'index de sécurité est configuré pour, dans un cas dans lequel le type de la structure représentée par les informations de spécification de structure acceptées est le GFS type-3, calculer la valeur d'index de sécurité S sur la base de la Formule (48) suivante en utilisant la taille L de la clé, le nombre de tours r et le nombre de divisions d :

[Formule 48]

$$S = 2^L \times \frac{r - \frac{d}{2}}{r} \quad \text{où } r \geq d - 1$$

**10.** Dispositif d'évaluation de cryptage selon la revendication 5, dans lequel :

dans la structure, le processus en tours est configuré par des processus en sous-tours pour des sous-blocs respectifs obtenus en divisant le bloc en un nombre de divisions prédéterminé ; et

le moyen de calcul de la valeur d'index de sécurité est configuré pour, dans un cas dans lequel le type de la structure représentée par les informations de spécification de structure acceptées est le GFS de Nyberg, calculer la valeur d'index de sécurité S sur la base de la Formule (49) suivante en utilisant la taille L de la clé, le nombre de tours r et le nombre de divisions d :

[Formule 49]

$$S = 2^L \times \frac{r-d}{r} \text{ où } r \geq \frac{3}{2}d$$

**11.** Dispositif d'évaluation de cryptage selon la revendication 5, dans lequel :

dans la structure, le processus en tours est configuré par des processus en sous-tours pour des sous-blocs respectifs obtenus en divisant le bloc en un nombre de divisions prédéterminé ; et

le moyen de calcul de la valeur d'index de sécurité est configuré pour, dans un cas dans lequel le type de la structure représentée par les informations de spécification de structure acceptées est le GFS multi-cible, calculer la valeur d'index de sécurité S sur la base de la Formule (50) suivante en utilisant la taille L de la clé, le nombre de tours r et le nombre de divisions d :

[Formule 50]

$$S = 2^L \times \frac{r-1}{r} \text{ où } r \geq 1$$

**12.** Dispositif d'évaluation de cryptage selon la revendication 5, dans lequel :

dans la structure, le processus en tours est configuré par des processus en sous-tours pour des sous-blocs respectifs obtenus en divisant le bloc en un nombre de divisions prédéterminé ; et

le moyen de calcul de la valeur d'index de sécurité est configuré pour, dans un cas dans lequel le type de la structure représentée par les informations de spécification de structure acceptées est le GFS multi-source, calculer la valeur d'index de sécurité S sur la base de la Formule (51) suivante en utilisant la taille L de la clé, le nombre de tours r et le nombre de divisions d :

[Formule 51]

$$S = 2^L \times \frac{r-(d-1)}{r} \text{ où } r \geq d-1$$

**13.** Dispositif d'évaluation de cryptage selon la revendication 5, dans lequel :

dans la structure, le processus en tours est configuré par des processus en sous-tours pour des sous-blocs respectifs obtenus en divisant le bloc en un nombre de divisions prédéterminé ; et

le moyen de calcul de la valeur d'index de sécurité est configuré pour, dans un cas dans lequel le type de la structure représentée par les informations de spécification de structure acceptées est le GFS asymétrique, calculer la valeur d'index de sécurité S sur la base de la Formule (52) suivante en utilisant la taille L de la clé, le nombre de tours r et le nombre de divisions d :

[Formule 52]

$$S = 2^L \times \frac{r-(d-1)}{r} \text{ où } r \geq d-1$$

**14.** Procédé d'évaluation de cryptage pour évaluer la sécurité d'un chiffrement par blocs en cryptant des données d'une taille prédéterminée pour chaque bloc en exécutant répétitivement un processus en tours un nombre de tours prédéterminé, le processus en tours utilisant des données de conversion de fonction de tour sur la base d'une clé, le procédé d'évaluation de cryptage comprenant :

accepter (11, 101) des informations de spécification de structure afin de spécifier une structure du chiffrement par blocs ; et

spécifier (12, 102) un nombre de non utilisations comme un nombre de fonctions de tour qui ne sont pas utilisées dans une attaque dite "meet-in-the-middle", sur la base des informations de spécification de structure acceptées, et calculer une valeur d'index de sécurité indiquant une quantité de calcul nécessaire pour spécifier la clé en effectuant une attaque dite "meet-in-the-middle", sur la base du nombre de non utilisations spécifié.

**15.** Procédé d'évaluation de cryptage selon la revendication 14, comprenant calculer la valeur d'index de sécurité sur la base d'un rapport d'une valeur obtenue en soustrayant le nombre de non utilisations spécifié d'un nombre total de fonctions de tour inclus par la structure du chiffrement par blocs au nombre total.

**16.** Programme d'évaluation de cryptage comprenant des instructions pour faire qu'un dispositif d'évaluation de cryptage effectue des opérations, le dispositif d'évaluation de cryptage évaluant la sécurité d'un chiffrement par blocs en cryptant des données d'une taille prédéterminée pour chaque bloc en exécutant un processus en tours d'un nombre de tours prédéterminé, le processus en tours utilisant des données de conversion de fonction de tour sur la base d'une clé, et les opérations comprenant :

accepter (11, 101) des informations de spécification de structure afin de spécifier une structure du chiffrement par blocs ; et

spécifier (12, 102) un nombre de non utilisations comme un nombre de fonctions de tour qui ne sont pas utilisées dans une attaque dite "meet-in-the-middle", sur la base des informations de spécification de structure acceptées, et calculer une valeur d'index de sécurité indiquant une quantité de calcul nécessaire pour spécifier la clé en effectuant une attaque dite "meet-in-the-middle", sur la base du nombre de non utilisations spécifié.

**17.** Programme d'évaluation de cryptage selon la revendication 16, comprenant des instructions pour faire que le dispositif d'évaluation de cryptage calcule la valeur d'index de sécurité sur la base d'un rapport d'une valeur obtenue en soustrayant le nombre de non utilisations spécifié d'un nombre total de fonctions de tour inclus par la structure du chiffrement par blocs au nombre total.

# Fig.1

ENCRYPTION EVALUATION DEVICE

STRUCTURE SPECIFICATION
INFORMATION ACCEPTING
PART

SECURITY INDEX VALUE
CALCULATING PART

EVALUATION OUTPUTTING
PART

# Fig.2

# Fig.3

# Fig.4

## Fig.5

# Fig.6

# Fig.7

# Fig.8

# Fig.9

# Fig.10

# Fig.11

## Fig.12

## Fig.13

$x^i_0$

# Fig.14

Fig.15

# Fig.16

# Fig.17

# Fig.18

ENCRYPTION EVALUATION DEVICE ⌐100

STRUCTURE SPECIFICATION INFORMATION ACCEPTING PART ⌐101

SECURITY INDEX VALUE CALCULATING PART ⌐102

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- Biclique Cryptanalysis of the Full AES. **A. BOGDANOV ; D. KHOVRATOVICH ; C. RECHBERGER.** ASIACRYPT 2011, LNCS 7073. Springer, 2011, 344-371
- Preimage Attacks on One-Block MD4, 63-Step MD5 and More. **K. AOKI ; Y SASAKI.** SAC2008, LNCS 538. Springer, 2009, 103-119
- On the Construction of Block Ciphers Provably Secure and Not Relying on Any Unproved Hypotheses. **Y ZHENG ; T. MATSUMOTO ; H. IMAI.** CRYPTO 1989, LNCS 435. Springer, 1990, 461-480
- **C. ADAMS ; J. GILCHRIST.** The CAST-256 Encryption Algorithm. Network Working Group RFC 2612, 09 January 2012
- The 128-Bit Blockcipher CLEFIA (Extended Abstract). **T. SHIRAI ; K. SHIBUTANI ; T. AKISHITA ; S. MORIAI ; T. IWATA.** FSE 2007, LNCS 4593. Springer, 2007, 181-195
- HIGHT: A New Block Cipher Suitable for Low-Resource Device. **D. HONG ; J. SUNG ; S.H. HONG ; J.-I. LIM ; S.-J. LEE ; B.-S. KOO ; C.-H. LEE ; D. CHANG ; J. LEE ; K. JEONG.** CHES 2006, LNCS 4249. Springer, 2006, 46.59
- Generalized Feistel Network. **K. NYBERG.** ASIACRYP 1996, LNCS 1163. Springer, 1996, 91-104
- The SPEED Cipher. **Y. ZHENG.** FC 1997, LNCS 1318. Springer, 1997, 71-90